# EUROPÄISCHE PATENTSCHRIFT

(11) **EP 2 711 209 B1**
(45) Veröffentlichungstag und Bekanntmachung des Hinweises auf die Patenterteilung: **17.06.2020**
(21) Anmeldenummer: 13004437.3
(22) Anmeldetag: 12.09.2013
(51) Int. Cl.: B60D 1/48

(54) **Trägeranordnung für eine Anhängekupplung oder einen Lastenträger aus einer Blechplatine**
Mounting arrangement for a trailer coupling or a load bearer from a sheet metal panel
Agencement de support pour un attelage ou un support de charge doté d'une platine de tôle

(30) Priorität: 20.09.2012 DE 102012018547
(43) Veröffentlichungstag der Anmeldung: 26.03.2014
(73) Patentinhaber: WESTFALIA - Automotive GmbH, 33378 Rheda-Wiedenbrück (DE)
(72) Erfinder: Angermann, Kay, D-04720 Döbeln (DE)
(74) Vertreter: Patentanwälte Bregenzer und Reule Partnerschaftsgesellschaft mbB

(56) Entgegenhaltungen:
- EP-A1- 2 316 670
- WO-A1-2006/065117
- DE-A1-102004 008 740

## Beschreibung

Die Erfindung betrifft eine Trägeranordnung für eine Anhängekupplung oder einen Lastenträger, gemäß dem Oberbegriff des Anspruchs 1.

Eine derartige Trägeranordnung ist in EP 2 316 670 A1 erläutert.

Solche Trägeranordnungen werden in der Regel verborgen unter einem Heck-Stoßfänger des Fahrzeugs, beispielsweise eines Personenkraftwagens, insbesondere mit einem Verbrennungsmotor, angebracht und tragen die Anhängekupplung oder eine Halterung dafür und/oder gegebenenfalls auch Halterungen für einen Lastenträger, die an der Trägeranordnung angeordnet werden können.

Aus DE 10 2004 008 740 A1 geht ein Querträger für ein Stoßfängersystem hervor, der anhand eines Extrusionsverfahrens hergestellt ist. Aus WO 2006/065117 A1 geht eine Anhängekupplung mit Querträger hervor, welcher aus einer Stahlplatte umgeformt ist.

Beispielsweise ist in EP 1 380 444 A1 eine derartige Trägeranordnung dargestellt, an der eine Anhängekupplung fest angeordnet ist, beispielsweise mit dem Querträger verschraubt ist. Die grundsätzliche Problematik bei einer Trägeranordnung ist es, dass sie zum einen eine relativ hohe Steifigkeit zum Tragen der Anhängekupplung oder des Lastenträgers aufweisen soll, zum anderen aber auch insbesondere im Falle eines Heckaufpralls auf das Fahrzeug eine gewisse Nachgiebigkeit haben soll, um die Folgen des Aufpralls zu mildern.

Ferner ist es zweckmäßig, wenn die Trägeranordnung konstruktiv einfach ist, das heißt leicht zu fertigen.

Die Trägeranordnung ist vorzugsweise möglichst leicht.

Es ist daher die Aufgabe der vorliegenden Erfindung, eine verbesserte Trägeranordnung bereitzustellen.

Zur Lösung der Aufgabe ist eine Trägeranordnung gemäß der technischen Lehre des Anspruchs 1 vorgesehen.

Es ist dabei ein Grundgedanke, dass die Trägeranordnung einen Grundkörper mit Querträger und einen Seitenträger und/oder Gehäuse für die Halterung der Anhängekupplung umfasst, wobei der Grundkörper aus einer einzigen Blechplatine gefertigt ist, also aus einem Stanz-Biegeteil oder Bauteil, das zunächst ausgeschnitten wird und anschließend z.B. umgekantet, umgebördelt oder dergleichen anderweitig umgeformt wird. Der Grundkörper ist einfach zu fertigen. Es genügen wenige Arbeitsgänge. Die Vorgänge, Schweißen, Kleben, Nieten etc. sind nicht oder jedenfalls in einem deutlich geringeren Umfang notwendig. Dies bedeutet allerdings nicht, dass es nicht auch vorteilhaft sein kann, Abschnitte der erfindungsgemäßen Trägeranordnung zu schweißen und/oder zu kleben und/oder zu nieten.

Weiterhin werden verhältnismäßig wenige Teile benötigt. Beispielsweise müssen nicht verschiedene Querrohre oder unterschiedliche Profilformen am Lager vorgehalten werden, um einen jeweils für einen Fahrzeugtyp angepassten Träger der Anhängekupplung oder des Lastenträgers herzustellen.

Das Gefüge der Trägeranordnung bzw. des Grundkörpers ist stabil, weil keine Schweißnähte notwendig sind oder jedenfalls nur wenige Schweißnähte, so dass die Gefahr, dass die Schweißnaht selbst oder eine sich neben der Schweißnaht befindliche Region des Grundkörpers bricht, verringert oder gar vollständig vermieden ist. Das Gefüge ist also weit gehend homogen, was eine höhere Belastbarkeit der Trägeranordnung bei gleichzeitig geringem Gewicht und Bauvolumen möglich macht.

Das Gehäuse für die Halterung der Anhängekupplung kann die Anhängekupplung, beispielsweise deren Antriebsmodul, Lager oder dergleichen, vollständig einhausen. Es versteht sich, dass das Gehäuse auch nur ein Teil-Gehäuse sein kann, d.h. dass zusätzliche Abdichtmaßnahmen zur Abdichtung des Gehäuses gegenüber Umwelteinflüssen möglich sind.

Eine bevorzugte Ausführungsform sieht vor, dass die Halterung der Anhängekupplung und/oder des Lastenträgers im Sinne einer Versteifung wirkt, beispielsweise als eine Art Kasten ausgestaltet ist, der die Trägeranordnung, insbesondere im Bereich des Gehäuses für die Halterung, versteift.

Das Gehäuse für die Halterung der Trägeranordnung kann sehr einfach verschlossen werden, beispielsweise durch ein Antriebsmodul oder Lagermodul der Anhängekupplung selbst. Aber auch eine zusätzliche Abdeckung, zum Beispiel eine Folie, eine Platte oder dergleichen, ist ohne weiteres möglich.

Die Blechplatine ist beispielsweise aus Metallblech, z.B. Stahlblech, Aluminiumblech oder dergleichen, und/oder aus einem Polymerblech. Es sind zum Beispiel so genannte Organobleche möglich. Weiterhin kann das Grundmaterial für die Blechplatine ein Kaltwalzprodukt oder ein Warmwalzprodukt sein.

Bevorzugt ist es, wenn die Blechplatine mittels eines thermischen Trennverfahrens, zum Beispiel Laserschneiden, hergestellt wird. Es ist aber auch möglich, zum Beispiel die Platine mit einer Schere aus dem Halbzeug auszuscheiden oder mit einem Stanzwerkzeug auszustanzen, bevor sie zu dem Grundkörper umgeformt wird.

Es können lokale Versteifungselemente eingebracht werden, wo es notwendig ist. Beispielsweise sind die Versteifungselemente entsprechend der späteren Belastung, zum Beispiel durch einen Anhänger, an dem Grundkörper vorgesehen. Die zugeschnittene Blechplatine oder der Zuschnitt der Blechplatine ist zweckmäßigerweise an das Fließverhalten angepasst. Auch eine Gewichtsoptimierung ist möglich. Beispielsweise können einzelne Aussparungen oder dergleichen vorgesehen sein, um das Gewicht des Grundkörpers zu reduzieren. Eine Aussparung oder Öffnung kann auch eine verstärkende Funktion haben, indem beispielsweise Randbereiche der Aussparung umgekantet sind.

Das erfindungsgemäße Verfahren funktioniert beispielsweise folgendermaßen:
Die Blechplatine wird aus einem Grundmaterial oder Halbzeug ausgeschnitten, beispielsweise mittels eines Lasers, einer Schere, eines Stanzwerkzeugs oder dergleichen.

Die Blechplatine wird anschließend zu einem Blechprägeteil, nämlich dem Grundkörper umgeformt, wobei integral beispielsweise die Seitenträger, ein Gehäuse oder eine Halterung für die Anhängekupplung oder dergleichen in einem Schritt angeformt bzw. umgeformt werden.

Sofern es erforderlich ist, können beispielsweise die Seitenträger und/oder der Querträger - selbstverständlich auch jedes andere Element des Grundkörpers - nachkalibriert werden, um eine optimale Maßhaltigkeit bzw. Maßgenauigkeit für die Anbringung an dem Zugfahrzeug bzw. dem Fahrzeug zu ermöglichen.

Wenn größere Stückzahlen gewünscht sind, ist es möglich, beispielsweise ein Blech-Wickel, ein sogenanntes Coil, seitlich zu beschneiden und anschließend im Umformwerkzeug weiter zu bearbeiten. Dort wird das Blechprägeteil, nämlich der Grundkörper, hergestellt. Das fertige Blechteil wird aus dem Umformwerkzeug entfernt und direkt am Fahrzeug montiert, gegebenenfalls vorher noch nachkalibriert.

Selbstverständlich können im Zusammenhang mit der Montage oder vor der Montage am Fahrzeug auch Bauteile an der Trägeranordnung angeordnet werden, zum Beispiel Montageelemente, Befestigungsösen, Schrauben oder dergleichen.

Durch gezielt eingebrachte Abkantungen, Falze, Ausformungen von Rippen, Sicken oder dergleichen, können Grundkörper mit sehr hoher Steifigkeit hergestellt werden. Selbstverständlich ist diese Steifigkeit nicht am gesamten Grundkörper erforderlich, sondern kann auch lokal vorgesehen sein. Beispielsweise ist der Querträger im Bereich der Halterung für die Anhängekupplung oder den Lastenträger besonders steif und belastbar. Dies kann beispielsweise dadurch erzielt werden, dass eine Verstärkungsumformung im Bereich der Halterung besonders tief eingeprägt oder umgeformt ist.

Selbstverständlich kann an dem Grundkörper auch eine weitere Komponente, zum Beispiel eine komplementäre, ebenfalls belastbare Schale angeformt werden. Dadurch entsteht eine hochfeste, dünnwandige und leichte Konstruktion.

Weiterhin ist es möglich, den Grundkörper je nach Bedarf partiell zu versteifen, beispielsweise durch entsprechende Einleger oder dergleichen.

Bevorzugt hat der Querträger beispielsweise einen U-förmigen oder Z-förmigen oder V-förmigen oder W-förmigen Querschnitt. Selbstverständlich sind auch andere Querschnitte ohne weiteres möglich.

Der Grundkörper kann beispielsweise aus Stahl und/oder Leichtmetall bestehen. Der Grundkörper selbst kann an sich schon dünnwandig, leicht und hochfest sein. Der mindestens eine an dem Grundkörper angeordnete Verstärkungskörper erhöht die Steifigkeit des Tragbauteils. So kann beispielsweise eine dünnwandige Metallkonstruktion des Grundkörpers durch eine Versteifung aus Kunststoff so verstärkt werden, dass sie die durch die Anhängekupplung oder den Lastenträger verursachten Kräfte, Aufprallkräfte bei einem Unfall oder dergleichen ohne weiteres aufnehmen kann.

Der Grundkörper kann zur Gewichtsreduzierung Aussparungen aufweisen. Schon beim Zuschnitt von Platinen zur Herstellung des Grundkörpers oder durch Nachbearbeitung des Grundkörpers können vorteilhaft weitere Potenziale zur Massereduzierung durch lokale Ausnehmungen genutzt werden. Z.B. durch eine entsprechende Werkzeugkontur können auch lokale Ausformungen am insbesondere als Schale ausgebildeten Grundkörper erzeugt werden, die zur strukturellen Steifigkeitserhöhung beitragen.

Zweckmäßigerweise ist bei einer Aussparung mindestens ein umgekanteter Abschnitt und/oder eine lokale Auskragung vorgesehen. Jedenfalls ist es vorteilhaft, wenn eine Aussparung nicht nur Gewicht reduzierend wirkt, sondern gleichzeitig auch noch verstärkend oder versteifend.

Der Grundkörper und/oder die Blechplatine sind vorzugsweise mittels eines thermischen Trennverfahrens, zum Beispiel Lasertrennen, hergestellt. Aber auch ein Schneiden aus einem Coil-Halbzeug, zum Beispiel mittels einer Scheranordnung (so genanntes Scherschneiden) ist möglich. Die Platine kann durch Stanzen hergestellt sein. Es versteht sich, dass die vorgenannten Trennverfahren sowohl bei der Blechplatine, d.h. noch vor der Herstellung des Grundkörpers, durch Umformen, als auch später beim fertiggestellten Grundkörper möglich sind, der sozusagen durch mindestens einen Zuschnitt noch nachgearbeitet wird. Das muss aber nicht sein.

Der Grundkörper ist beispielsweise durch eine Kaltumformung oder eine Warmumformung oder beides gebildet. Es kann z.B. eine Warmumformung mit kontrolliertem Abschrecken im Werkzeug, also ein Presshärten, vorgesehen sein.

Bevorzugt ist es, wenn der Grundträger, also beispielsweise der Querträger und die integral daran angeordneten Seitenträger, keine Schweißnaht aufweist. Das kann man durch Kaltumformung, Warmumformung oder beides herstellen.

Zwar ist es bevorzugt, dass keine Schweißnaht vorhanden ist. Selbstverständlich ist es aber auch möglich, insbesondere im Bereich des Gehäuses für die Halterung der Anhängekupplung oder des Lastenträgers, mindestens eine Schweißnaht oder sonstige thermische Verbindungen vorzusehen.

Bevorzugt ist es beispielsweise, wenn sich zwei benachbarte Abschnitte des Grundkörpers überlappen, stumpf aneinander stoßen oder dergleichen. Die benachbarten Abschnitte können auch mittels eines Falzes, also auch eine Umformer-Behandlung, miteinander verbunden werden. Damit das Gefüge möglichst nicht beeinträchtigt wird, sind Klebeverbindungen zwischen benachbarten Abschnitten des Grundkörpers, beispielsweise Seitenwänden des Gehäuses für die Halterung, Übergangsbereiche zwischen Seitenträger und Querträger oder dergleichen, möglich.

Wenn eine Schweißnaht oder eine Verschweißung erforderlich ist, ist eine Widerstandsverschweißung, zum Beispiel eine Rollnahtverschweißung und/oder eine Punkt-Verschweißung oder dergleichen, vorteilhaft, um das Gefüge des Grundkörpers möglichst wenig zu beeinträchtigen.

Der Grundkörper hat erfindungsgemäß mindestens eine Verstärkungsumformung, nämlich eine Verstärkungssicke, und/oder zweckmäßigerweise eine Ausnehmung zur Gewichtsreduktion. Eine Ausnehmung, die eine Gewichtsreduktion zur Folge hat, kann beispielsweise umgekantete Wandabschnitte haben.

Eine im Bereich einer Quermitte des Querträgers zwischen den Seitenträgern angeordnete Verstärkungsumformung hat zweckmäßigerweise eine größere, sich von einer Seitenfläche des Querträgers weg erstreckende Tiefe als eine sich zwischen der Quermitte und einen Seitenträger vorgesehene (zweite) Verstärkungsumformung. Die tiefere Verstärkungsumformung versteift den Querträger beispielsweise besser als die weniger tiefe Verstärkungsumformung, was insbesondere im Bereich der Quermitte des Querträgers (zwischen den Seitenträgern) einen Vorteil darstellt.

Eine Verstärkungsumformung, vorzugsweise eine Kerbvertiefung, kann beispielsweise an einem Kantenbereich des Grundträgers vorgesehen sein. Insbesondere ist eine solche Kantenvertiefung oder sind mehrere solche Kantenvertiefungen beim Querträger, der besonders steif sein soll, vorteilhaft.

Die Seitenträger können mit dem Querträger fluchtend sein. Die Seitenträger können auch parallel zum Querträger verlaufen oder etwa parallel, d.h. mit einem sehr stumpfen Winkel von beispielsweise 185° bis 175° zum Querträger stehen und diesen sozusagen in Längserstreckungsrichtung verlängern. Beispielsweise sind die Seitenträger als Montagebleche zur Montage am Heck-Bereich der Karosserie des Fahrzeugs vorgesehen, zum Beispiel am hinteren Heck-Abschlussblech. Es sind Seitenträger, die in der Art von Schwertern ausgestaltet sind, d.h. Seitenträger, die winkelig zum Querträger stehen, beispielsweise in einem Winkel von etwa 80-110°, normalerweise etwa 90°, möglich.

Mindestens ein Seitenträger weist zweckmäßigerweise eine Deformationsstruktur zur geplanten Deformation bei einem Heckaufprall auf das Fahrzeug auf. Dieser Ansatz, der an sich eine eigenständige Erfindung darstellt, stellt sicher, dass der Seitenträger nachgibt und die Montagebereiche des Seitenträgers ihre Position relativ zu den Montagebereichen der Karosserie des Fahrzeugs beibehalten. Diese Erfindung betrifft also z.B. eine Trägeranordnung für eine Anhängekupplung oder einen Lastenträger, umfassend einen Querträger und mit dem Querträger verbundene Seitenträger zur Montage an einem Heck einer Karosserie eines Fahrzeugs, sowie mindestens eine an dem Querträger angeordnete Halterung für eine Anhängekupplung oder für ein Kupplungsteil eines Lastenträgers, wobei vorgesehen ist, dass mindestens ein Seitenträger eine Deformationsstruktur zur geplanten Deformation bei einem Heckaufprall auf das Fahrzeug aufweist. Beispielsweise reißen deshalb Schrauben, mit denen der Seitenträger am Fahrzeug befestigt ist, nicht aus. Es versteht sich, dass eine derartige Ausgestaltung der Seitenträger eine an sich eigenständige Erfindung darstellt.

Es kann vorgesehen sein, muss aber nicht, dass die Trägeranordnung einen aus einer Blechplatine durch Umformen gefertigten, den Querträger umfassenden Grundkörper umfasst. Mithin müssen also die Seitenträger nicht integral an den Querträger angeformt sein, sondern können beispielsweise auch mit einem Profilrohr verbunden sein, das sich in Querrichtung hinter dem Fahrzeug erstreckt (wenn es dort montiert ist) mithin also den Querträger darstellt. Der Querträger, an dem ein derartig deformierbarer Seitenträger angeordnet ist, kann auch ein durch Umformung hergestellter Träger, also ein Umform-Querträger, zum Beispiel ein Guss-Querträger, sein.

Bevorzugt befindet sich die Deformationsstruktur zwischen zwei Montagebereichen des Seitenträgers, die zur Montage an der Karosserie des Fahrzeugs vorgesehen sind. Der Seitenträger macht also eine Deformation der Karosserie bzw. eines Abschnitts der Karosserie, der sich neben der Deformationsstruktur des Seitenträgers erstreckt, korrespondierend mit. Verformt sich also die Karosserie, verformt sich der Seitenträger ebenfalls mit bzw. umgekehrt. Die Montagebereiche des Seitenträgers und die entsprechenden Montagepunkte an der Karosserie behalten ihre Relativposition weitgehend, so dass Schrauben oder andere Befestigungsmittel (Verschweißung, Verkleben oder dergleichen) nicht beschädigt werden.

Eine bevorzugte Variante der Trägeranordnung sieht vor, dass mindestens ein Tragbauteil der Trägeranordnung, insbesondere der Querträger, durch mindestens ein eine Faseranordnung aufweisendes Faserwerkstoffelement verstärkt ist.

Es ist ein Grundgedanke der Erfindung, ein Tragbauteil der Trägeranordnung, zum Beispiel den Querträger, Seitenträger, die Halterung für die Anhängekupplung oder das Kupplungsteil, durch ein Faserwerkstoffelement mit einer Faseranordnung zu verstärken. Das Grundmaterial, beispielsweise ein entsprechendes Blech, der so verstärkten Komponente, kann verhältnismäßig dünn ausgestaltet sein. Somit können beispielsweise Verbundbleche hergestellt werden, die relativ dünnes Blech enthalten und anschließend durch den Faserverbundwerkstoff bzw. das Faserwerkstoffelement verstärkt sind.

Die Fasern können beispielsweise in einer Richtung liegen. Es sind aber auch mehrere Lagen von Fasern möglich, wobei sich die Faser-Längserstreckungsrichtungen kreuzen können, zueinander winkelig sind oder dergleichen. Das Faserwerkstoffelement kann beispielsweise ein Non-Woven-Faserwerkstoffelement sein, zum Beispiel ein Vlies, ein Filz oder dergleichen. Das Faserwerkstoffelement kann aber auch ein Gewebe oder ein Fasergeflecht umfassen. Selbstverständlich können die Fasern auch miteinander vermascht sein, zum Beispiel zu einem so genannten Gewirk oder Gestrick. Alle vorgenannten Arten und Formen der Faser-Anordnung können selbstverständlich zu einem einzigen, sozusagen in sich hybriden Faserwerkstoffelement zusammengefasst sein.

Das Faserwerkstoffelement kann eine duroplastische und/oder thermoplastische Werkstoffbasis oder Matrix haben. Die Matrix nimmt die Fasern auf und stützt diese und leitet Kräfte auf sie ein. Die Matrix erfüllt auch die Klebefunktion, z.B. durch Erhitzen. Die Matrix kann auch ohne ein Erhitzen klebefähig sein. Vorzugsweise wird die Matrix ausgehärtet.

Die duroplastische Variante eignet sich dazu, dass beispielsweise das Faserwerkstoffelement, hier vorzugsweise in Form eines sogenannten Prepregs oder Formkörpers, als Ganzes erhitzt wird oder im Zusammenhang mit der Umformung des durch das Faserwerkstoffelement verstärkten Tragbauteil erhitzt wird, wodurch diese Faser-Matrix-Kombination klebfähig ist und an dem Tragbauteil bzw. dessen Grundkörper anhaftet.

Die duroplastische Matrix eignet sich dazu, dass beispielsweise das Faserwerkstoffelement als Ganzes erhitzt wird oder im Zusammenhang mit der Umformung des durch das Faserwerkstoffelement verstärkten Tragbauteils erhitzt wird, wodurch das Faserwerkstoffelement klebfähig wird und an dem Tragbauteil bzw. dessen Grundkörper anhaftet.

Bei der thermoplastischen Variante ist das Faserwerkstoffelement zweckmäßigerweise mit einem Klebstoff an das Tragbauteil angeklebt. Beispielsweise wird dafür ein Mehrkomponenten-Klebstoff verwendet, der sich für Kunststoff-Metall-Verbindungen und/oder Kunststoff-Kunststoff-Verbindungen eignet. Bevorzugt sind Klebstoffe, die beim späteren Recycling Vorteile haben. Der Klebstoff kann beispielsweise bei einer Wärmebehandlung flüssig bzw. klebend werden und die Klebeverbindung zwischen dem mindestens einen Faserwerkstoffelement und dem solchermaßen verstärkten Grundkörper des Tragbauteils herstellen.

Durch die Ausgestaltung und Anordnung von einem oder mehreren Faserwerkstoffelementen ist es möglich, unterschiedlich feste oder steife Bereiche der Trägeranordnung herzustellen. Somit können beispielsweise dort, wo hohe Festigkeiten erforderlich sind, entsprechend stärker versteifende Faserwerkstoffelemente verwendet werden, während in Bereichen, wo eine geringere Festigkeit oder Steifigkeit notwendig ist, keine oder andere, weniger versteifende Faserwerkstoffelemente vorgesehen sind.

Jedenfalls ist es möglich, durch die Verwendung geeigneter Faserwerkstoffelemente einen homogenen Kraft- und Spannungsverlauf in der Trägeranordnung, beispielsweise einem Querträger, einzustellen.

Das Tragbauteil ist also beispielsweise ein Halbzeug, das dann einen Bestandteil der Trägeranordnung bildet.

Eine bevorzugte Ausführungsform sieht vor, dass beispielsweise ein Grundträger aus einem einzigen Blech-Bauteil bzw. einer einzigen Blechplatine hergestellt ist, wobei der Grundkörper nicht nur den Querträger, sondern auch einen oder beide Seitenträger und/oder ein integral durch den Körper der Blechplatine gebildetes Gehäuse umfasst.

Dieser Grundkörper oder auch ein Grundkörper beispielsweise nur des Querträgers besteht also beispielsweise aus einem kalt oder warm umgeformten Blech, das dann gezielt durch eines oder mehrere Faserwerkstoffelemente optimiert verstärkt wird. Ein Faserverbund-Material mit Polymermatrix steigert die Steifigkeit beispielsweise offener Profile, zum Beispiel Blechprofile, über den gesamten Querschnitt oder wahlweise auch nur dort, wo es notwendig ist, das heißt lokal.

Das mindestens eine Faserwerkstoffelement kann auch ein so genannter Faserformkörper oder Prepreg sein, also eine dem mindestens einen Tragbauteil angepasste Kontur aufweisen.

Das mindestens eine Faserwerkstoffelement bzw. die Faseranordnung kann Fasern unterschiedlicher Art aufweisen, beispielsweise Glasfasern, Kohlenstofffasern, organische Fasern oder dergleichen. Auch Aramid-Fasern sind möglich. Beispielsweise wird als organische Faser Flachs, Hanf, Jute, Kokos und/oder Sisal verwendet. Zweckmäßig sind also beispielsweise Naturfasern, die auch Vorteile bezüglich der Ökobilanz haben.

Das durch das Faserwerkstoffelement verstärkte Tragbauteil kann durch ein weiteres Ergänzungsbauteil, zum Beispiel eine komplementäre Schale oder dergleichen, verstärkt sein. Das Ergänzungsbauteil kann ebenfalls durch eines oder mehrere Faserwerkstoffelemente verstärkt sein. Das Ergänzungsbauteil ist beispielsweise eine Art Deckel. Es können auch beispielsweise zwei Halb-Schalen aneinander gefügt werden, um insgesamt eine tragende Komponente der Trägeranordnung zu bilden.

Es ist auch möglich, dass beispielsweise so genannte Organobleche als Formkörper verwendet werden, um das Tragbauteil oder eine sonstige Komponente der Trägeranordnung zu verstärkten.

Bei dem erfindungsgemäßen Verfahren ist es bevorzugt, wenn ein in einem Rohling des Faserwerkstoffelements enthaltenen Klebstoffes zum Ankleben des Faserwerkstoffelements an das mindestens eine Tragbauteil erhitzt wird. Dieser Schritt des Erhitzens kann beispielsweise bei einer thermischen Bearbeitung des Tragbauteils als ganzes, zum Beispiel beim Beschichten des Tragbauteils mit einer Schutzschicht, eines Lacks oder dergleichen, geschehen. Aber auch bei einem so genannten Prepreg-Pressverfahren, bei dem das Faserwerkstoffelement quasi an das Tragbauteil eingestempelt oder eingepresst wird, kann eine derartige Erhitzung vorteilhaft stattfinden.

Die Erhitzung kann auch teilweise geschehen, das heißt, dass zunächst bei einem Pressen des Faserwerkstoffelements an das Tragbauteil eine Teil-Erhitzung stattfindet und anschließend bei einem weiteren Arbeitsschritt, zum Beispiel in einem Bad bei einer Tauchlackierung, einem Ofen oder dergleichen, die Matrix des Faserwerkstoffelements ausgehärtet wird. Selbstverständlich kann das Faserwerkstoffelement innen, außen oder dergleichen an dem Tragbauteil angeordnet sein. Beispielsweise ist es möglich, das Faserwerkstoffelement als eine Umhüllung des Tragbauteils auszugestalten, beispielsweise in der Art einer Manschette. Es sind auch Mehrlagen-Konstruktionen möglich, d.h. dass beispielsweise das mindestens eine Faserwerkstoffelement zwischen Metalllagen oder Blechlagen des Tragbauteils zu liegen kommt, in der Art eines Sandwichs.

Bei günstigen Herstellkosten und rationeller und präziser Fertigung sind eine hohe Steifigkeit, Energieabsorption, Belastbarkeit und Stabilität erzielbar.

Vorzugsweise ist vorgesehen, dass die Trägeranordnung mindestens ein als ein Mehrkomponentenbauteil ausgebildetes Tragbauteil aufweist, das einen Grundkörper und einen mit dem Grundkörper verbundenen Verstärkungskörper umfasst, der eine Rippenstruktur und/oder einen Schaumkörper aus einem technischen Schaum aufweist. Dabei ist ein Grundgedanke, dass ein so genanntes Hybrid-Bauteil bereitgestellt wird, das zwei oder mehrere Komponenten umfasst, nämlich zum einen einen Grundkörper und einen mit dem Grundkörper verbundenen Verstärkungskörper. Selbstverständlich kann das Mehrkomponentenbauteil auch weitere Verstärkungskörper und/oder Grundkörper umfassen. Der Verstärkungskörper umfasst eine Rippenstruktur, zum Beispiel eine Art Fachwerk-Struktur oder einen technischen Schaum oder beides. Somit erfüllt der Verstärkungskörper seine Verstärkungsfunktion, während der Grundkörper sozusagen die Grundstruktur des Tragbauteils bereitstellt.

Der Grundkörper ist beispielsweise als ein Aufnahmekörper ausgebildet, in welchem der Verstärkungskörper aufgenommen ist. Beispielsweise hat der Grundkörper eine Aufnahmevertiefung, in die der Verstärkungskörper eingebracht ist. Die Vertiefung ist beispielsweise im Querschnitt U-förmig. Der Grundkörper kann beispielsweise auch in der Art einer Schale ausgestaltet sein. Die Schale besteht z.B. aus Stahl, Leichtmetall, Kunststoff. Selbstverständlich sind Mischformen der vorgenannten Ausführungsformen möglich. Der eingebrachte, mindestens eine Verstärkungskörper aus Leichtmetall oder Kunststoff verstärkt den Grundkörper.

Vorteilhaft ist vorgesehen, dass die Trägeranordnung mindestens ein Tragbauteil aufweist, das einen insgesamt oder zumindest abschnittsweise durch Presshärten hergestellt ist. Das Tragbauteil weist z.B. einen mittels Presshärten hergestellten Grundkörper auf.

Der Grundkörper wird bei dem Presshärten warm umgeformt und dann abgekühlt, insbesondere abgeschreckt. Der Grundkörper wird z.B. vor dem Umformen erwärmt und/oder in einem erwärmten Presswerkzeug bearbeitet. Zweckmäßigerweise findet auch die Abkühlung des Grundkörpers im Presswerkzeug statt.

Der insgesamt oder abschnittsweise pressgehärtete Grundkörper kann somit eine Steifigkeit aufweisen, die an den jeweiligen Bedarf am besten angepasst ist. Somit ist es beispielsweise möglich, den Grundkörper abschnittsweise warm umzuformen und dabei zugleich zu härten, während andere Abschnitte unbehandelt bleiben. Lokale Härteunterschiede im Bauteil können für einen homogenen Kraft- und Spannungsverlauf im Tragbauteil, insbesondere dem Querträger, sorgen.

Lokale Ausnehmungen am Grundkörper dienen vorteilhaft einer Massereduzierung. Lokale Ausformungen können zweckmäßigerweise die Steifigkeit verbessern.

Es ist eine an den Kraft- und Spannungsverlauf angepasste Trägerstruktur möglich. Es wird weniger Material benötigt, so dass die Trägeranordnung leicht und kostengünstig ist, was z.B. auch Kraftstoff spart. Der Grundkörper ist hochfest, dünnwandig und leicht.

Die Erfindung ermöglich eine gezielt homogene Einleitung der Kräfte und Momente in die Karosserie.

Ein Querträger ist zweckmäßigerweise mittig höherfest gehärtet und hat nach außen hin einen Verlauf mit geringeren Härten, vorteilhaft analog dem Kraft- und Spannungsverlauf bei Nutzung oder Belastung des Querträgers. Dies ist z.B. durch partielle Kühlung im Werkzeug einstellbar.

Beispielsweise wird der Grundkörper durch ein direktes Presshärten und/oder indirektes Presshärten und/oder partielles Presshärten hergestellt.

Der Grundkörper kann beispielsweise zunächst kalt umgeformt und anschließend durch Presshärten nachbearbeitet sein. Somit können also beispielsweise manche Bereiche des Grundkörpers ohne Weiterbehandlung bleiben, während andere Bereiche durch Presshärten nachbehandelt werden und dadurch eine höhere Festigkeit und damit eine höhere Steifigkeit und Belastbarkeit aufweisen.

Z.B. wird die hohe Festigkeit des Tragbauteils dadurch erreicht, dass Borstahl auf 880-950°C erhitzt wird, dann warm umgeformt und im Gesenk abkühlt, so dass er gehärtet ist.

Während ungehärteter Borstahl etwa 600 N/mm² Rm und 20% A aufweist, hat gehärteter Borstahl, z.B. 22MnB5, BTR 1650, Usibor 1500, etwa 1650 N/mm² Rm und 8% A, so dass das Tragbauteil effizient dort gehärtet ist oder wird, wo es Vorteile bringt.

Das Härten direkt im Werkzeug minimiert oder verhindert einen Verzug des Grundkörpers bzw. des Tragbauteils.

Der Grundkörper umfasst beispielsweise einen Mangan-Stahl, einen Mangan-Bor-Stahl oder dergleichen. Bevorzugt ist 22MnB5-Stahl.

Der Grundkörper ist beispielsweise aus einer Blechplatine vorgeformt, zum Beispiel umgeformt und anschließend durch Presshärten nachbearbeitet.

Eine Aufheizzeit zum Austenitisieren des Grundkörpers beträgt beispielsweise 5-10 min oder dergleichen. Die Austenitisierungstemperatur liegt vorzugsweise in einem Bereich von 880 °C bis 950 °C.

Eine Abkühlzeit in einem steifen Bereich des Grundkörpers liegt etwa zwischen 1 s und 10 s, beispielsweise 3-5 s. Somit wird also ein besonders steifer Bereich des Grundkörpers erzielt. Ein weicherer Bereich des Tragbauteils bzw. des Grundkörpers, beispielsweise im Bereich der Längsenden des Querträgers oder im Bereich der Seitenträger, kann wesentlich länger abkühlen, zum Beispiel mehrere Minuten. Somit kann also durch gezieltes Abkühlen erreicht werden, dass der Grundkörper bzw. das Tragbauteil unterschiedlich steife Bereiche hat.

Der Grundkörper weist beispielsweise eine Blechwand auf, die zwischen 1 mm und 3 mm stark ist, bevorzugt zwischen 1,5 und 2,5 mm.

Der Grundkörper, insbesondere wenn er den Querträger bildet, weist beispielsweise an seinen Längsendbereichen über seinen Querschnitt eine Zugfestigkeit von etwa 400-800 N/mm² auf. Beispielsweise ist also der Querträger an den Längsendbereichen relativ weich bzw. gibt auf Zug nach.

Quermittig oder in einem Quermittenbereich hingegen, insbesondere im Bereich der mindestens einen Halterung oder im Bereich der Halterungen für den Lastenträger (es können beispielsweise zwei Halterungen für Steckarme des Lastenträgers in einem Längsabstand zueinander am Querträger vorgesehen sein) ist der Querträger vorteilhaft wesentlich zugfester, beispielsweise größer als 1200 N/mm², insbesondere größer als 1500 N/mm².

Vorzugsweise ist vorgesehen, dass der Querträger im Bereich der mindestens einen Halterung und/oder quermittig oder in einem Quermittenbereich eine höhere Steifigkeit und/oder einen größeren Querschnitt und/oder ein höheres Widerstandsmoment aufweist als an seinen Längsenden.

Vorteilhaft ist vorgesehen, dass der Querträger entlang seiner Längserstreckungsachse zwischen seinen Längsenden bei einer auf ihn wirkenden Kraft eine etwa konstante Spannung aufweist.

Der Grundkörper kann vorzugsweise mit einer zunderhemmenden Beschichtung versehen sein. Dies verbessert unter anderem die Nachbearbeitung, beispielsweise durch Schweißen oder dergleichen.

Der Grundkörper weist zweckmäßigerweise eine Beschichtung auf Aluminium-Silizium-Basis auf. Auch eine Verzinkung des Grundkörpers ist vorteilhaft. Beides trägt dazu bei, eine Oxidation des Stahl-Bleches bei Erwärmung, beispielsweise auf mehr als 800 °C, was bei dem Presshärten vorkommen kann, zu vermeiden oder zumindest zu verringern. Die Verwendung einer Beschichtung auf AlSi-Basis verhindert die Verzunderung und verringert somit gezielt den Werkzeugverschleiß während der Umformung. Zudem bildet sie, ebenfalls wie eine automobilbautypische Verzinkung von Blech, die Grundlage für einen entsprechenden Korrosionsschutz.

Zweckmäßigerweise weist der Grundkörper mindestens eine Verstärkungsumformung, insbesondere eine Verstärkungssicke, oder Verstärkungsrippe auf. Die Verstärkungsumformung, insbesondere eine Verstärkungssicke, wird bei dem Presshärten in den Grundkörper eingebracht. Sie kann jedoch auch bei einer Kaltumformung bereits eingebracht werden und beispielsweise bei der Presshärtung noch weiter vertieft und/oder warm nachbehandelt werden.

Die Trägeranordnung umfasst zweckmäßigerweise die Anhängekupplung. Beispielsweise ist ein Kuppelkörperträger, an dem ein Kuppelkörper, zum Beispiel eine Kupplungskugel, angeordnet ist, lösbar mit der Trägeranordnung verbindbar, beispielsweise an die Halterung oder eine an der Halterung angeordnete Steckaufnahme ansteckbar. Der Kuppelkörperträger kann also abnehmbar, insbesondere steckbar, oder fest am Kraftfahrzeug montiert sein. Ferner kann der Kuppelkörperträger, zum Beispiel ein Kupplungsarm auch an einem Lager dergestalt gelagert sein, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Fahrzeug vor, beispielsweise nach hinten vor einen Stoßfänger, so dass der Anhänger angehängt werden kann. Das Lager ist beispielsweise ein Schwenklager, ein Schiebelager oder eine Kombination davon, zum Beispiel ein Schwenk-Schiebe-Lager. Das Lager kann einen Bestandteil der Halterung der Trägeranordnung bilden oder an der Halterung befestigbar sein.

Nachfolgend werden Ausführungsbeispiele der Erfindung anhand der Zeichnung erläutert. Es zeigen:
- Figur 1: eine perspektivische Schrägansicht eines 1. Ausführungsbeispiels einer Trägeranordnung von schräg hinten (quasi von schräg hinten auf das die Trägeranordnung aufweisende Fahrzeug gesehen),
- Figur 2: die Trägeranordnung gemäß Figur 1 von schräg oben vorn,
- Figur 3: die Trägeranordnung gemäß Figuren 1, 2 frontal von oben,
- Figur 4: die Trägeranordnung gemäß vorstehenden Figuren von schräg vorn unten,
- Figur 5: eine Blechplatine der Trägeranordnung gemäß Figuren 1-4,
- Figur 6: eine perspektivische Schrägansicht eines 2. Ausführungsbeispiels einer Trägeranordnung von schräg hinten,
- Figur 7: die Trägeranordnung gemäß Figur 6 von schräg oben vorn,
- Figur 8: die Trägeranordnung gemäß Figuren 6, 7 frontal von oben,

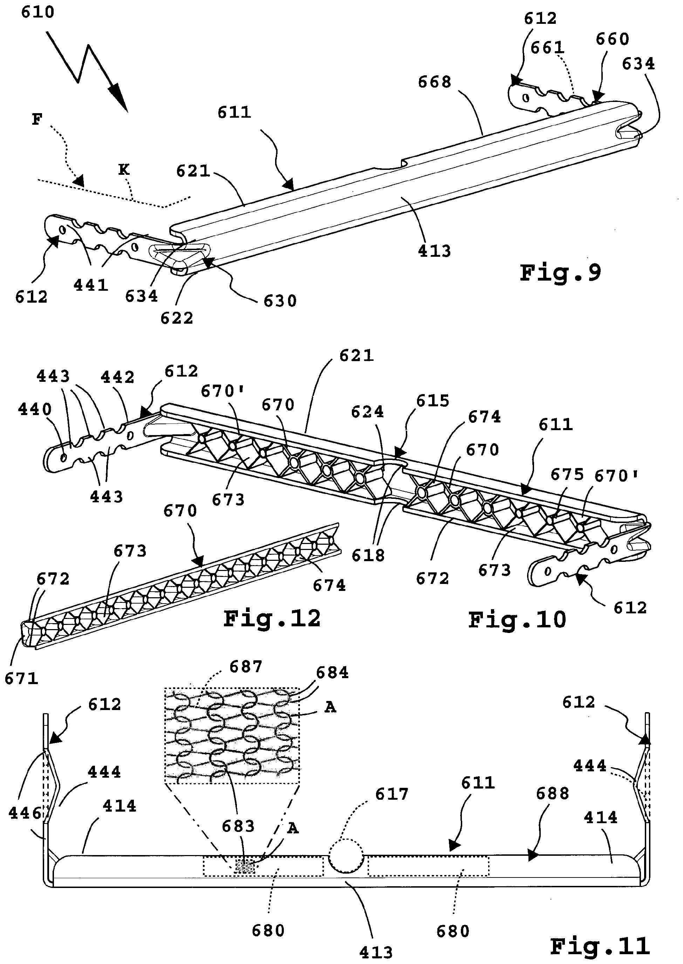

- Figur 9: eine perspektivische Schrägansicht eines 3. Ausführungsbeispiels einer Trägeranordnung von schräg hinten,
- Figur 10: die Trägeranordnung gemäß Figur 9 von schräg oben vorn,
- Figur 11: die Trägeranordnung gemäß Figuren 9, 10 frontal von oben,
- Figur 12: ein Verstärkungselement der Trägeranordnung des 3. Ausführungsbeispiels,

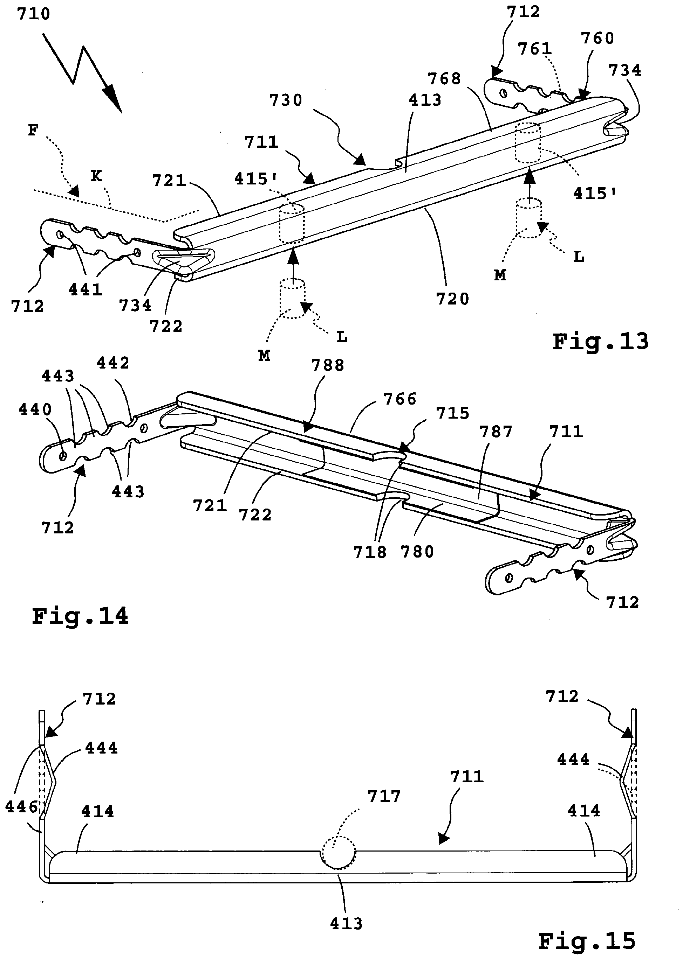

- Figur 13: eine perspektivische Schrägansicht eines 4. Ausführungsbeispiels einer Trägeranordnung von schräg hinten,
- Figur 14: die Trägeranordnung gemäß Figur 13 von schräg oben vorn,
- Figur 15: die Trägeranordnung gemäß Figuren 13, 14 frontal von oben,

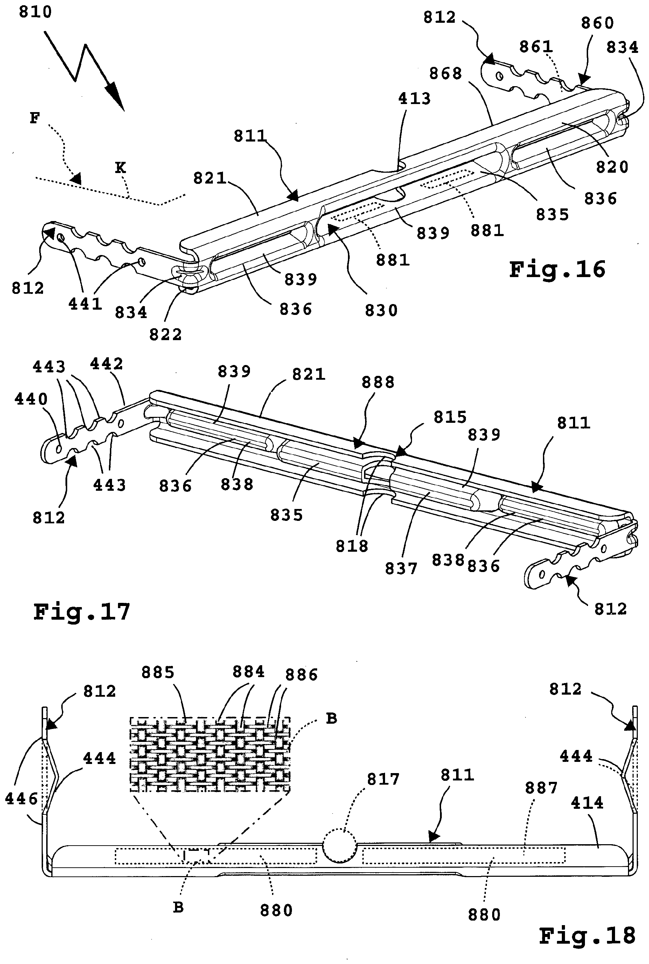

- Figur 16: eine perspektivische Schrägansicht eines 5. Ausführungsbeispiels einer Trägeranordnung von schräg hinten,
- Figur 17: die Trägeranordnung gemäß Figur 16 von schräg oben vorn,
- Figur 18: die Trägeranordnung gemäß Figuren 16, 17 frontal von oben,

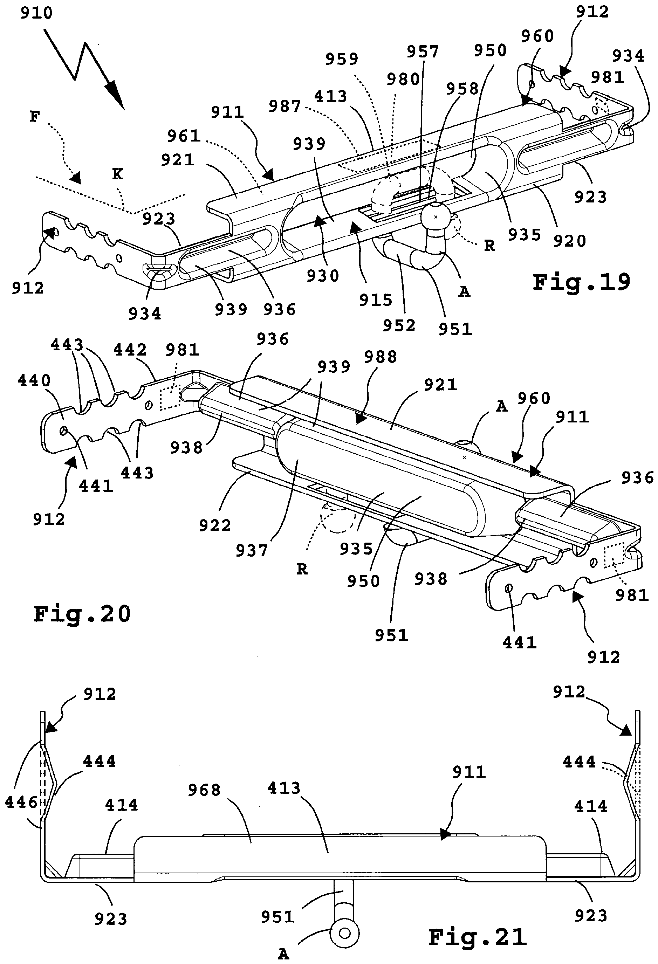

- Figur 19: eine perspektivische Schrägansicht eines 6. Ausführungsbeispiels einer Trägeranordnung von schräg hinten,
- Figur 20: die Trägeranordnung gemäß Figur 19 von schräg oben vorn,
- Figur 21: die Trägeranordnung gemäß Figuren 19, 20 frontal von oben,
- Figur 22: eine schematische Seitenansicht eines Presswerkzeugs zur Herstellung eines Verbund-Tragbauteils, das in
- Figur 23: im fertiggestellten Zustand dargestellt ist, und
- Figur 24: ein Tragbauteil für eine Trägeranordnung, bei dem ein Faserwerkstoffelement in der Art einer Manschette vorgesehen ist.

Bei der nachfolgenden Beschreibung der Ausführungsbeispiele sind gleiche oder gleichartige Komponenten mit denselben Bezugsziffern versehen. Zur leichteren Unterscheidbarkeit der verschiedenen Ausführungsbeispiele sind dem 1. Ausführungsbeispiel zugeordnete Bezugsziffern im Zahlenbereich von 400, dem 2., 3., 4., 5. und 6. Ausführungsbeispiel zugeordnete Bezugsziffern im Zahlenbereich von 500, 600, 700, 800 und 900 vorgesehen.

Die Trägeranordnungen 410-910 umfassen Querträger 411-911, von denen seitlich Seitenträger 412-912 abstehen. Die Seitenträger 412-912 dienen zur Montage an einer schematisch dargestellten Karosserie K eines Fahrzeugs F, beispielsweise eines Personenkraftwagens mit Verbrennungsmotor und/oder Elektromotor. Häufig sind die Querträger 411-911 ganz oder teilweise hinter einer Heckschürze oder einem Heck-Stoßfänger des Fahrzeugs F verborgen.

Bei den Trägeranordnungen 410-910 sind diverse Maßnahmen getroffen, damit sie bei leichter Bauweise der noch eine höchst mögliche Stabilität und Steifigkeit aufweisen, allerdings nur dort, wo es sinnvoll und zweckmäßig ist. Zudem ist die Herstellung bzw. Fertigung der Trägeranordnungen 410-910 einfach und günstig. Selbst das Recycling ist ohne weiteres möglich, was nachfolgend deutlich wird.

Im Bereich einer Quermitte 413 der Querträger 411-911 ist eine Halterung 415-915 für eine Anhängekupplung 451-951 vorgesehen. Alternativ oder ergänzend können auch beispielsweise eine oder mehrere Halterungen 415' für einen Lastenträger L vorgesehen sein. Beispielsweise können Kupplungsteile M des Lastenträgers L an den zum Beispiel Schraubaufnahmen, Steckaufnahmen oder dergleichen aufweisenden Halterungen 415' befestigt werden.

Die Seitenträger 412-912 sind an Längsenden 414 der Querträger 411-911 vorgesehen und zu diesem winkelig, beispielsweise etwa 90° (wobei auch größere oder kleinere Winkel ohne weiteres möglich sind. Beispielsweise sind alternativ zu den Seitenträgern 512 beim Querträger 511 der Trägeranordnung 510 noch Seitenträger 512' eingezeichnet, die beispielsweise zur Montage an einem Heck-Abschlussblech der Karosserie des Fahrzeugs F, an den hinteren Längsenden von den Längsträgern der Karosserie oder dergleichen geeignet sind. Die Längserstreckungsrichtungen der Seitenträger 512' und des Querträgers 511 sind etwa parallel.

Die Querträger 411-911 sind in ihrem Grund-Querschnitt im wesentlichen U-förmig. Von einer Bodenwand oder Grundwand 420-920 stehen jeweils Seitenwände 421-921 und Seitenwände 492-922 winkelig ab. Die Grundwand 420-920 steht im am Fahrzeug F eingebauten Zustand oder eingebauten Zustand der Trägeranordnungen 410-910 etwa vertikal, während die Seitenwände 421-921 und 492-922 etwa horizontal verlaufen und obere und untere Wände bilden. Die Grundwand 420-920 ist also beispielsweise eine hintere Wand.

Die Grundwand 420-920 erstreckt sich jeweils bis zu den Längsenden 414, d.h. also bis zu den Seitenträgern 412-912. Allerdings ist die Grundwand 920 in einem mittleren Bereich 916 des Querträgers 911 breiter und weist die beiden oberen und unteren Seitenwände 921 und 992 auf, während zu den Längsenden 414 hin schmalere Abschnitte 923 der Grundwand 920 keine oberen und unteren Schenkel bzw. Seitenwände 921-922 aufweisen. Dies wirkt unter anderem im Sinne einer Verstärkung bzw. höheren Steifigkeit des Querträgers 911 im mittleren Bereich 916.

Bei den Querträgern 411-911 dienen also beispielsweise die Seitenwände 421-921, 422-922 zur Verstärkung, vorzugsweise im Bereich der Quermitte 413. Weiterhin sind Verstärkungsumformungen 430-930 vorgesehen, die die Steifigkeit der Querträger 411-911 verbessern.

So sind beispielsweise beim Querträger 411 und 511 in einem vorzugsweise ausgerundeten (eckig oder polygonal wäre auch möglich) Kantenbereich 424-524 Kerbvertiefungen 431-433, 531-533 vorgesehen. Die neben der Halterung 415, 515 angeordneten Kerbvertiefungen 431, 531 sind tiefer als in Richtung zu den Längsenden 414 hin daneben angeordneten Kerbvertiefungen 432, 532, welche wiederum tiefer sind als die nahe bei den Längsenden 414 befindlichen Kerbvertiefungen 433, 533. Die Steifigkeit des Querträgers 411 und 511 ist also quermittig dadurch etwas höher als queraußen bzw. im Bereich der Seitenträger 412 und 512.

Die Kerbvertiefungen 431-433, 531-533 sind etwa V-förmig, wobei sie in das Material des Querträgers 411, 511 sozusagen eingeprägt werden.

Im Bereich der Längsenden 414 sind weitere Verstärkungsumformungen 430-930 vorgesehen, allerdings bei sämtlichen der Trägeranordnungen 410-910. Dies ist nicht so zu verstehen, dass bei einer erfindungsgemäßen Trägeranordnung stets an den Längsenden Verstärkungsvertiefungen oder Verstärkungsumformungen notwendig sind. Allerdings tragen die im Übergangsbereich zwischen den Querträgern 411-911 und den Seitenträgern 412-912 vorgesehenen Kerbvertiefungen 434-934 insgesamt zu einer Versteifung und optimalen Anbindung der Seitenträger 412-912 an die Querträger 411-911 bei.

Weiterhin ist die geometrische Ausgestaltung der Kerbvertiefungen 431- 433, 531-533 sowie 434-934 nur exemplarisch zu verstehen. Auf die V-Form kommt es nämlich nicht an. Auch U-förmige Vertiefungen, Vertiefungen an anderer Stelle oder dergleichen, sind ohne weiteres möglich.

Dies wird beispielsweise auch dadurch deutlich, dass nämlich bei Trägeranordnungen 810 und 910 auch ein anderes Konzept bei deren Verstärkungsumformungen 830 und 930 zum Einsatz kommt. So haben beispielsweise die Querträger 811 und 911 in ihren mittleren Bereichen Vertiefungen 835, 935, die sich tiefer von der Grundwand 820 und 920 weg nach hinten erstrecken als Vertiefungen 836 und 936, die sich zwischen den Vertiefungen 835, 935 und den Seitenträgern 812 und 912 befinden. Die sehr tiefen Vertiefungen 835 und 935 haben eine größere Versteifungswirkung als die weniger tiefen Vertiefungen 836, 936. Die Vertiefungen 835, 935 und die Vertiefungen 836, 936 erstrecken sich vorzugsweise in der jeweiligen Längserstreckungsrichtung der Querträger 811 und 911. Die Vertiefungen 835, 935 und die Vertiefungen 836, 936 haben Grundwände oder Bodenwände 837, 937 bzw. 838 und 938, zwischen denen und den Grundwänden 820 und 920 der Querträger 811 und 911 Seitenwände 839, 939 vorgesehen sind.

Die Seitenwände 839, 939 bzw. verlaufen neben den von der Grundwand 820 bzw. 920 weg erstreckenden Seitenwänden 821 und 822, jedoch nicht ganz parallel, sondern etwas schräg geneigt, so dass sich die jeweilige Vertiefung 835, 836, 935, 936 zu den Bodenwänden 837, 838, 937, 938 hin verjüngt bzw. enger wird. Im Bereich der Vertiefungen 835, 935, 836, 936 sind die Querträger 811 und 911 im Querschnitt sozusagen Z-förmig oder Doppel-Z-förmig.

Die Längsendbereiche der Vertiefungen 835, 935, 836, 936 sind zweckmäßigerweise ausgerundet.

Die Seitenträger 412-912 sind mit den Querträgern 411-911 einstückig verbunden.

Die Konstruktion der Seitenträger 412-912 ist vorliegend etwa identisch, so dass dieselben Bezugsziffern verwendet werden.

Die Seitenträger 412-912 sind im Wesentlichen plattenförmig. Beispielsweise haben die Seitenträger 412-912 plattenförmige Wände 440.

Zur Montage der Seitenträger 412-912 an der Karosserie K des Fahrzeugs F sind Bohrungen 441 vorgesehen, durch die Schrauben oder derartige Befestigungsbolzen hindurch gesteckt und mit der Karosserie K verschraubt werden können. Die Bohrungen 441 befinden sich an korrespondierenden Montagebereichen 446 der Seitenträger 412-912. Während sich eine Bohrung 441 in der Nähe des freien Endes des Seitenträgers 412-912 befindet, ist die andere Bohrung 441 nahe beim Querträger 411-911, etwa im Bereich der Kerbvertiefungen 434-934.

An den Schmalseiten 442 der Wände 440 bzw. der Seitenträger 412-912, sozusagen den Längsschmalseiten, befinden sich zwischen Bohrungen 441 einige Aussparungen 443, so dass dort das Material der Wand 440 geschwächt ist und eine Deformationsstruktur 444 ausgebildet ist. Die Deformationsstruktur 444 wölbt sich oder knickt beispielsweise wie in der Zeichnung dargestellt bei einem Heckaufprall auf das Fahrzeug F nach innen zur Karosserie K hin oder (nicht dargestellt) von der Karosserie K weg. Die verformten Deformationsstrukturen 444 sind in durchgezogenen Linien, die unverformten Seitenträger 412-912 sind in gestrichelten Linien dargestellt.

Die Aussparungen 443 befinden sich einander gegenüberliegend, was optional ist, so dass bei sich gegenüberliegenden Aussparungen 443 sozusagen eine Taillierung vorhanden ist. Im Falle eines Heckaufpralls auf den Querträger 411-911, also eines Aufpralls auf die Grundwand 420-920, verformt sich auch die Karosserie K des Fahrzeugs F, wobei sich neben der Deformationsstruktur 444 jeweils ebenfalls ein sich bei einem Heckaufprall deformierender Bereich der Karosserie K ist (nicht dargestellt) und sich somit der Relativabstand von Schraublöchern bzw. Montagebereichen der Karosserie K zur Verbindung mit den die Bohrungen 441 durchsetzenden, nicht dargestellten Bolzen verringert. Die Deformationsstruktur 444 macht diese Deformation der Karosserie K also mit, so dass die die Bohrungen 441 durchsetzenden, nicht dargestellten Bolzen in den korrespondierenden Montagebereichen oder Bohrungen der Karosserie K bleiben und nicht etwa ausreißen.

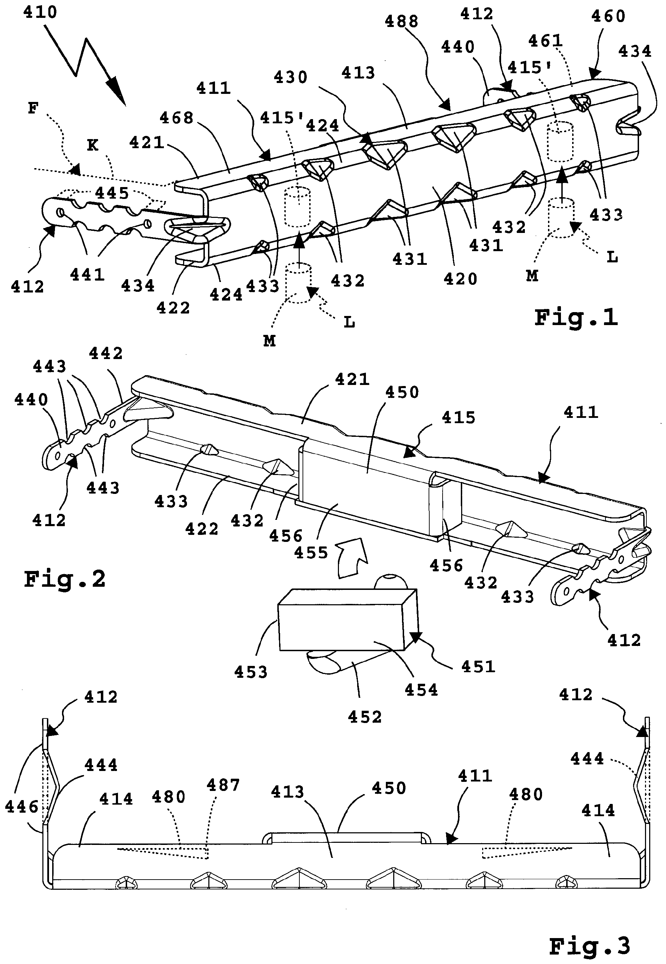

Selbstverständlich sind auch andere Geometrien von Seitenträgern und/oder an die Querträger 411-911 seitlich angesetzte, mit diesen nicht-einstückige Seitenträger (nicht dargestellt) möglich. Die Seitenträger der Trägeranordnungen 410-910 könnten auch zumindest lokale Verstärkungen aufweisen, beispielsweise Verstärkungsabschnitte 445 oder dergleichen, was exemplarisch in Figur 1 eingezeichnet ist. Die Verstärkungsabschnitte 445 sind beispielsweise im Bereich der Bohrungen 441 vorgesehen, so dass die Montagebereiche 446 lokal verstärkt sind. Die Verstärkungsabschnitte 445 sind beispielsweise in der Art der Seitenwände 421, 422 umgekantete Abschnitte, die sich von der Wand 440 weg erstrecken.

Die Halterungen 415-915 können integral an den Querträgern 411-911 vorgesehen sein oder auch angesetzte, eingesetzte oder dergleichen anderweitig befestigte Bauelemente umfassen.

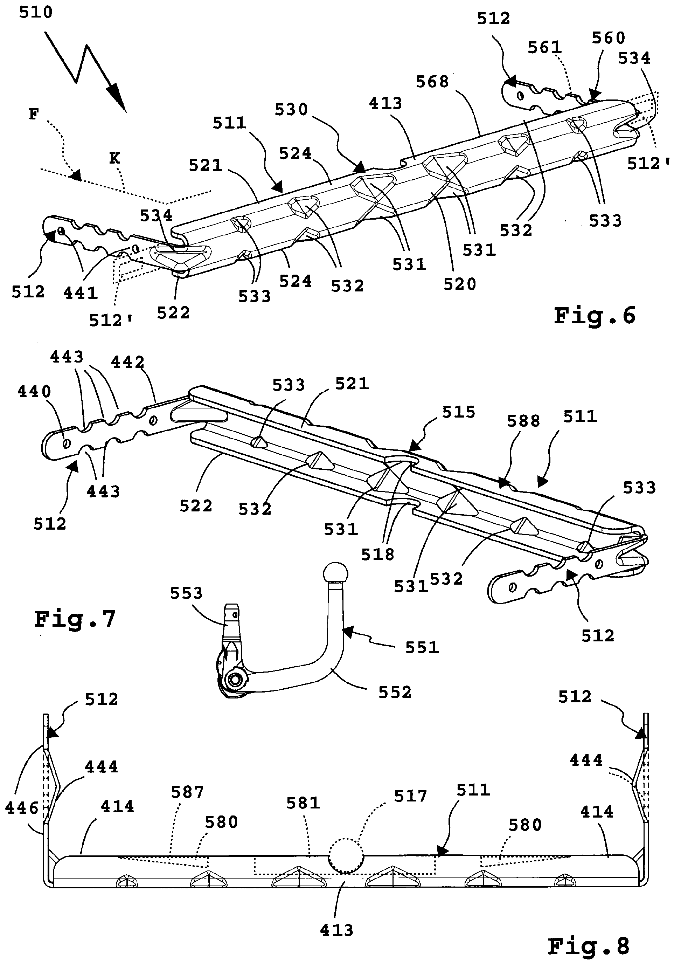

Beispielsweise sind Steckaufnahme-Elemente 517, 617, 717 und 817 bei den Trägeranordnungen 510-810 vorgesehen. In die beispielsweise als Hülsen ausgestalteten Steckaufnahme-Elemente 517-817 bzw. deren Steckaufnahmen kann beispielsweise ein Steckende 553 eines Kupplungsarmes 552 einer Anhängekupplung 551 (Figur 7) eingesteckt werden. An den Seitenwänden 521-821 bzw. 522-822 sind jeweils Aussparungen 518-818 vorgesehen, deren Innenkontur der Außenkontur der Steckaufnahme-Elemente 517-817 entspricht, so dass diese formschlüssig gehalten werden. Die Steckaufnahme-Elemente 517-817 sind beispielsweise mit den Querträgern 511-811 verklebt, verschweißt oder anderweitig fest verbunden. Selbstverständlich sind auch Schraubverbindungen möglich, insbesondere um das Gefüge oder Material der Querträger 511-811 nicht zu beeinträchtigen.

Die Trägeranordnungen 410 und 910 umfassen Gehäuse 450 und 950 für eine Anhängekupplung 451, 951. Die Anhängekupplung 451, 951 umfasst beispielsweise einen Kupplungsarm 452, 952 der an einem Kupplungsmodul 453 vorgesehen ist oder direkt im Gehäuse 950 schwenkbar und/oder verschieblich gelagert ist, wofür eine nicht näher erläuterte Lageranordnung mit beispielsweise einem Schwenklager und/oder einem Schiebelager vorhanden ist.

Die Kupplungsarme 452 und 952 sind zwischen einer nach hinten vor das Fahrzeug F vorstehenden, zum Ziehen eines Anhängers vorgesehenen Arbeitsstellung A und einer vorzugsweise hinter einer Heckschürze oder einem Stoßfänger des Fahrzeugs F zurück verstellten Ruhestellung R gelagert. Zweckmäßigerweise sind Antriebe zum Verstellen der Kupplungsarme 452 und 952 zwischen diesen Stellungen vorgesehen, beispielsweise integriert in das Kupplungsmodul 453. Es ist aber auch möglich, dass der Kupplungsarm 452 und/oder 952 manuell verschwenkt wird. Darauf kommt es nicht an. Weiterhin können für Regelungen zum Verriegeln der Kupplungsarme 452 und 952 in der Arbeitsstellung A und/oder der Ruhestellung R vorgesehen sein, was auch nicht detailliert dargestellt ist.

Das Kupplungsmodul 453 umfasst ein Modulgehäuse 454, in dem beispielsweise eines oder mehrere Lager (Schwenklager und/oder Schiebelager) für den Kupplungsarm 452 und/oder eine Verriegelung für den Kupplungsarm 452 vorhanden ist.

Das Kupplungsmodul 453 bzw. das Modulgehäuse 454 sind als Ganzes in das Gehäuse 450 einsteckbar und dort auch verriegelbar und/oder befestigbar ist, beispielsweise mittels Schrauben, Bolzen oder dergleichen.

Vorteilhaft wirkt das Kupplungsmodul 453 im Sinne einer Versteifung des Gehäuses 450.

Das Gehäuse 450 umfasst beispielsweise eine Rückwand 455 sowie Seitenwände 456, die sich von der Rückwand 455 zur Grundwand 420 hin erstrecken. Ein der Rückwand 455 gegenüberliegender Abschnitt der Grundwand 420 bildet eine Vorderwand des Gehäuses 450. Ein oberer Abschnitt der oberen Seitenwand 421 bildet sozusagen die obere Abdeckung des Gehäuses 450, so dass bis auf eine untere Öffnung 457, durch die das Modulgehäuse 454 einsteckbar ist, ein insgesamt geschlossenes Gehäuse gebildet ist. Beispielsweise ist die Öffnung 457 an einem Abschnitt 458 der unteren Seitenwand 422 vorgesehen.

Es versteht sich, dass in das Gehäuse 450 auch direkt ein Kupplungsarm montierbar ist, beispielsweise eine Aufnahmehülse, eine Lageranordnung, Motoren und dergleichen, weil das Gehäuse 450 ausreichend Platz bietet.

Das Modulgehäuse 454 passt formschlüssig in den Innenraum des Gehäuses 450, so dass eine untere Wand oder untere Abdeckung des Modulgehäuse 454 die Öffnung 457 sozusagen von unten her verschließt. Selbstverständlich sind Dichtungen, z.B. Gummielemente, und dergleichen anderes, ohne weiteres möglich. Das Modulgehäuse 454 kann beispielsweise auch in das Gehäuse 450 eingeklebt werden.

Das Gehäuse 950 wird durch die mittlere Vertiefung 935 bereitgestellt. Beispielsweise befindet sich an der unteren Seitenwand 939 eine Öffnung 957, durch die ein Abschnitt 959 des Kupplungsarms in den Innenraum des Gehäuses 950 hinein verstellt werden kann, so dass nur noch die Kupplungskugel oder ein anderes Kuppelelement nach unten vor das Gehäuse 950 vorsteht, wenn der Kupplungsarm 952 die Ruhestellung R einnimmt.

Vorzugsweise ist an der Öffnung 957 eine Dichtungsanordnung 957, die z.B. Dichtlippen umfasst, vorgesehen.

Die Trägeranordnungen 410-910 umfassen jeweils integral hergestellte Grundkörper 460-960, die aus einer einzigen Blechplatine 461-961 bzw. deren Körper 468-968 hergestellt sind. Die Grundkörper 460-960 umfassen jeweils die Querträger 411-911 sowie integral daran angeformt die Seitenträger 412-912.

Bei den Grundkörpern 460 und 960 der Trägeranordnungen 410 und 910 sind zudem noch die Gehäuse 450, 950 für die Halterungen 415 und 915 vorgesehen. Die Gehäuse 450 und 950 sind also auch integrale Bestandteile der Grundkörper 460-960, was die Herstellung erleichtert.

Die Blechplatinen 461-961 bestehen beispielsweise aus einem Stahlblech, Aluminiumblech oder dergleichen.

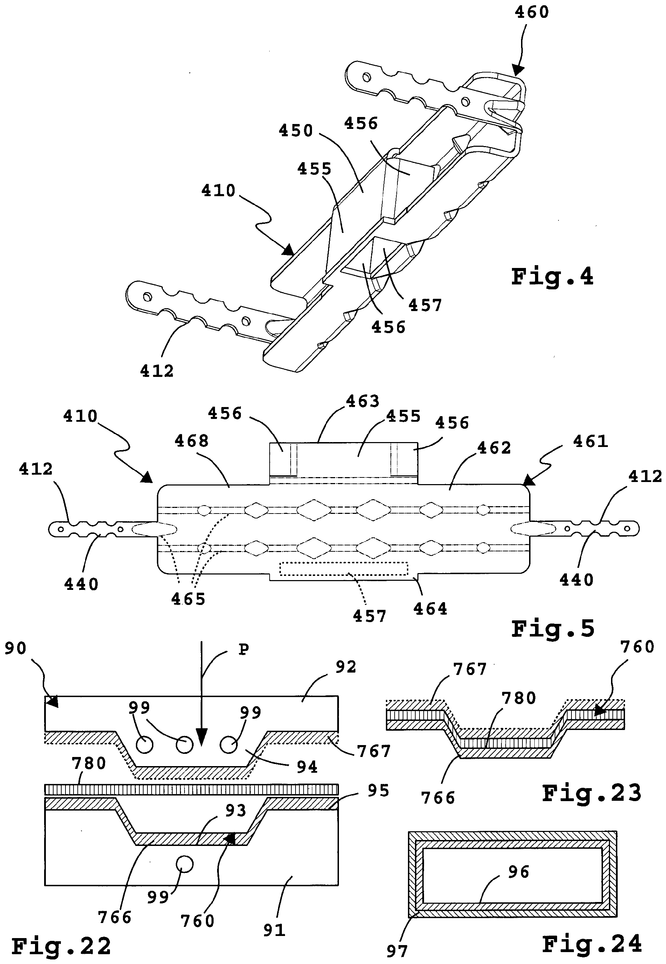

In Figur 5 ist exemplarisch die Blechplatine 461 der Trägeranordnung 410 dargestellt, die bereits aus einem Halbzeug oder Coil ausgeschnitten ist, beispielsweise mittels eines Lasers, einer Schere, eines Stanzwerkzeugs oder einer Werkzeuganordnung, die eines oder mehrere der vorgenannten Schneid-Werkzeuge umfasst.

Die Blechplatine 461 umfasst beispielsweise einen Hauptabschnitt 462, von dem in Längserstreckungsrichtung seitlich die Wände 440 der Seitenträger 412 abstehen. Quer zur Längserstreckungsrichtung stehen vom Hauptabschnitt 462 ein zur Bildung der Rückwand 455 und der Seitenwand 456 vorgesehener Abschnitt 463 sowie diesem gegenüberliegend ein weiterer Abschnitt 464 ab, der später die Öffnung 457 sozusagen umrahmt bzw. an dem die Öffnung 457 ausgebildet ist.

Eine bevorzugte Herstellung sieht vor, dass an der Blechplatine 461 bereits Präge-Linien 465 vorgesehen sind, die in der Zeichnung gestrichelt eingezeichnet sind und später das Umkanten oder Umfalzen erleichtern bzw. eine gezielte Krafteinleitung ermöglichen. Das ist jedoch nicht notwendig, sondern stellt eine Option dar.

Selbstverständlich können die Grundkörper 460-960 durch die Verstärkungsumformungen oder auch andere Maßnahmen bereits so ausgestaltet sein, dass sie einen an den Spannungsverlauf bzw. eine optimale Krafteinleitung beim Zugbetrieb des Anhängers und/oder bei einem Heckaufprall angepassten Steif igkeitsverlauf oder Festigkeitsverlauf haben.

Weiterhin ist es möglich, beispielsweise Abschnitte der Grundkörper 460 zu härten, eine Presshärtung vorzunehmen oder dergleichen, um optimale Eigenschaften einzustellen.

Beim Querträger 611 der Trägeranordnung 610 ist beispielsweise ein Verstärkungskörper 670 vorgesehen, der in einen Innenraum 624 des Querträgers 611 eingesetzt ist. Der Innenraum 624 wird beispielsweise von den Seitenwänden 621 und 622 sowie der Grundwand 620 begrenzt. Der Verstärkungskörper 670 umfasst beispielsweise eine Grundwand 671 sowie von dieser U-förmig abstehende Seitenwände 672. Diese Wände begrenzen einen Innenraum, in welchem eine Rippenstruktur 673 angeordnet ist, die versteifend wirkt. Die Rippenstruktur 673 umfasst beispielsweise Rippen, die integral mit den Seitenwänden 672 und/oder der Grundwand 671 verbunden sind und diese sozusagen abstützt. Dementsprechend wirkt die Rippenstruktur 673 auch im Sinne einer Verstärkung des Querträgers 611, an welchem der Verstärkungskörper 670 formschlüssig anliegt oder formschlüssig im Innenraum angeordnet ist.

Selbstverständlich können auch hier optimal an einem Festigkeitsverlauf oder Spannungsverlauf angepasste Rippenstrukturen vorgesehen sein, d.h. dass beispielsweise im Bereich der Quermitte 613 eine größere Versteifung gewünscht ist, während längs außen oder quer außen, das heißt im Bereich der Längsenden 414, schwächere Rippen 675 und/oder weniger Rippen vorgesehen sind und im mittleren Bereich 413 starke Rippen 674. Die Rippen der Rippenstruktur 673 verlaufen beispielsweise diagonal zwischen den Seitenwänden 672, insbesondere in einem Winkel von etwa 45° dazu und kreuzen sich, so dass eine X-förmige Rippenstruktur (in Draufsicht von hinten, vorgesehen ist.

Beispielsweise ist zwischen der Halterung 615 und den Seitenträgern 12 jeweils mindestens ein Verstärkungskörper 670 vorgesehen. Der Verstärkungskörper 670 ist beispielsweise in den Innenraum 624 eingeklebt. Es können auch mehrere, unterschiedlich ausgestaltete Verstärkungskörper 670, 670' vorgesehen sein, beispielsweise mit schwächeren oder stärkeren Rippen.

Es versteht sich, dass eine Rippenstruktur oder dergleichen andere verstärkende Komponente auch an einen erfindungsgemäß hergestellten, das heißt z.B. aus einer Blechplatine bestehenden Grundkörper angespritzt sein kann. Beispielsweise besteht eine derartige Rippenstruktur aus Kunststoff, was im Übrigen auch zweckmäßigerweise beim Verstärkungskörper 670 der Fall ist.

Ein Konzept, das insbesondere bei den einstückigen, d.h. aus einem Grundkörper 460-960 bestehenden Trägeranordnungen 410-910 vorteilhaft ist, aber auch beispielsweise bei mehrteiligen, in der Zeichnung nicht dargestellten Trägeranordnungen sieht eine insbesondere lokale Verstärkung der Trägeranordnung vor, wo zweckmäßigerweise die Steifigkeit und/oder Festigkeit der Trägeranordnung höher sein soll. Mithin ist also das nachfolgend beschriebene Konzept nicht auf die Anwendung der an sich vorteilhaften Grundkörper, die einstückig aus einer Blechplatine hergestellt sind, anwendbar, sondern kann auch bei beliebigen anderen Trägeranordnungen, auch beispielsweise aus Profilelementen oder dergleichen, mit Vorteil eingesetzt werden.

Beispielsweise sind an der oberen Seitenwand 421 der Trägeranordnung 410 bzw. des Querträgers 411 Faserwerkstoffelemente 480 vorgesehen, beispielsweise dreieckförmige Faserwerkstoffelemente.

Dieses Konzept ist auch bei der Trägeranordnung 510 vorgesehen, das heißt dass am Querträger 511 ebenfalls dreieckförmige Faserwerkstoffelemente 580 vorgesehen sind, so dass ein Bereich zwischen der Quermitte 513 und den Seitenträgern 512 verstärkt ist. Weiterhin ist es vorteilhaft, im Bereich der Halterung 515 eine Verstärkung vorzusehen. Daher ist dort ein Faserwerkstoffelement 581 vorgesehen, das sozusagen die Halterung 515 bzw. der Bereich um die Aussparung 518 verstärkt. Das Steckaufnahme-Element 517 wird daher besonders gut von der oberen Seitenwand 521 und/oder der unteren Seitenwand 522 gehalten, die dort optional mithilfe des Faserwerkstoffelements 581 verstärkt ist. Bei einer oder beiden Seitenwänden 521 und/oder 522 kann beispielsweise ein Faserwerkstoffelement 581 vorgesehen sein.

Bei der Trägeranordnung 610 sind seitlich neben der Halterung 615 Faserwerkstoffelemente 680 vorgesehen, die die obere Seitenwand 621 verstärken. Beispielsweise umfassen die Faserwerkstoffelemente 680 eine Maschenstruktur 683, von der ein Ausschnitt A vergrößert dargestellt ist. Durch die Vermaschung von Fasern 684 wird eine optimale Verstärkung und Zugfestigkeit erzielt.

Bei der Trägeranordnung 710 ist ein Faserwerkstoffelement 780 in den Innenraum 724 des Querträgers 711 eingeklebt. Das Faserwerkstoffelement 780 ist flächig an den Innenseiten der Grundwand 720 sowie der oberen und unteren Seitenwände 721 und 722 eingeklebt, beispielsweise mittels eines thermoplastischen Klebers, was später noch deutlich wird.

Bei der Trägeranordnung 810 sind beispielsweise Faserwerkstoffelemente 880 an der oberen Seitenwand 821 vorgesehen. Die Faserwerkstoffelemente 880 umfassen beispielsweise ein in einer Ausschnittsvergrößerung B erkennbares Fasergeflecht 885 mit Fasern 884, 886, die sich jeweils kreuzen.

Selbstverständlich sind auch andere Faserstrukturen möglich, d.h. beispielsweise dass in Längserstreckungsrichtung des Querträgers 811 jeweils 2 Fäden oder Fasern 886 zweisträngig parallel verlaufen, während quer dazu nur jeweils ein Faden oder eine einsträngige Faser 884 vorgesehen ist, so dass in Längserstreckungsrichtung eine größere Verstärkung vorhanden ist.

Es ist auch möglich, dass beispielsweise bei Maschenstrukturen einfädige und mehrfädige Stränge miteinander vermascht sind.

Auch eine andere Winkellage sich kreuzender Fasern oder Fäden zueinander ist ohne weiteres möglich.

Selbstverständlich können auch an anderer Stelle Faserwerkstoffelemente vorgesehen sein, beispielsweise im Bereich der Vertiefung 835, zum Beispiel an deren Seitenwand 839 neben der Halterung 815. Dort sind zum Beispiel Faserwerkstoffelemente 881 vorgesehen, die beispielsweise eine Maschenstruktur wie die Maschenstruktur 683 und/oder ein Fasergeflecht wie das Fasergeflecht 885 umfassen.

Exemplarisch ist auch bei der Trägeranordnung 910 noch ein Faserwerkstoffelement 980 eingezeichnet, beispielsweise an der oberen Seitenwand 921 im Bereich der Halterung 915. Es wäre auch möglich, dass beispielsweise um den Ausschnitt bzw. die Öffnung 957 herum eines oder mehrere Faserwerkstoffelemente vorgesehen sind, die somit lokal verstärkend wirken, wo die Öffnung 957 eine gewisse Schwächung des Grundkörpers 960 darstellt.

Weiterhin ist es möglich, beispielsweise die Seitenträger 412-912 zu verstärken, wofür zum Beispiel Faserwerkstoffelemente 981 vorgesehen sind.

Faseranordnungen 587-987 der Faserwerkstoffelemente 580-980 oder 581, 881, 981 umfassen beispielsweise Kunststofffasern, insbesondere Aramid-Fasern, und/oder Kohlenstofffasern und/oder Glasfasern oder dergleichen andere nicht-organische Materialien, die zugfest sind. Selbstverständlich sind auch andere Fasern möglich, beispielsweise Naturfasern aus Sisal, Kokos und dergleichen.

Die Faseranordnungen 587-987 können z.B. Non-Woven-Faserwerkstoffelemente, insbesondere Vliese und/oder Filze und/oder Faden- oder Fasergelege umfassen, aber auch ein Gewebe und/oder ein Fasergeflecht umfassen. Die Faseranordnungen 587-987 weisen z.B. miteinander, insbesondere zu einem Gewirk und/oder einem Gestrick, vermaschte Fasern auf.

Die Faserwerkstoffelemente 580-980 oder 581, 881, 981 verstärken die Grundkörper 460-960, somit also Tragbauteile 488-988.

Die Faserwerkstoffelemente können beispielsweise mittels eines sozusagen normalen Anklebens, eines Press-Klebens oder dergleichen an die Grundkörper 460-960 angeklebt werden. Bevorzugt ist die Herstellung von einer Art Verbundblech mittels eines Presswerkzeugs, was in Figur 22 schematisch dargestellt ist.

Beispielsweise hat ein Presswerkzeug 90 ein unteres Presselement 91 und ein oberes Presselement 92. Am unteren Presselement 91 ist eine Aufnahme 93, am oberen Presselement 92 ein mit der Aussparung oder Aufnahme 93 korrespondierender Vorsprung 94 vorgesehen. Auf eine Auflagefläche 95, an der sich die Aufnahme 93 befindet, ist z.B. ein Abschnitt 766 des Grundkörpers 760 aufgelegt. Dort ist das Faserwerkstoffelement 780 anzukleben.

Der Abschnitt 766 erstreckt sich in die Aufnahme 93 hinein, während das Faserwerkstoffelement 780 noch eine flache Struktur hat. Selbstverständlich könnte das Faserwerkstoffelement 780 bereits eine der Aufnahme 93 angepasste Form haben, die es dann später gemäß der Ansicht gemäß Figur 23 hat. Wenn das obere Werkzeugelement oder Presselement 92 zum unteren Presselement 91 hinbewegt wird (dargestellt durch einen Pfeil P) presst dieses das Faserwerkstoffelement 780 in die Mulde am Abschnitt 766 hinein, so dass das Faserwerkstoffelement 780 die Kontur der Mulde oder Aufnahme 93 annimmt.

Beispielsweise sind das obere und/oder untere Presselement 91/92 geheizt (z.B. mit einer Heizung 99), so dass ein sich in den Fasern des Faserwerkstoffelements 780 befindlicher Klebstoff, zum Beispiel ein Harz, ein Thermoplast oder dergleichen, klebfähig wird und am Abschnitt 766 des Grundkörpers 760 anhaftet.

In Figur 23 ist schematisch dargestellt, das auf dieses Schichtgebilde enthaltend den Grundkörper 760 und das Faserwerkstoffelement 780 noch eine weitere Lage, beispielsweise eine Blechlage 767 aufgepresst oder aufgeprägt werden kann, so dass eine Art Sandwich entsteht.

Selbstverständlich kann das Faserwerkstoffelement auch in der Art einer Manschette ausgestaltet sein, was in Figur 24 deutlich wird. Beispielsweise ist ein Profilkörper 96, zum Beispiel ein Rohrkörper, z.B. aus Blechmaterial, vorgesehen, der von einer Faserwerkstoffelement-Manschette 97 umgeben ist und somit verstärkt.

## Patentansprüche

1. Trägeranordnung für eine Anhängekupplung (451; 551; 951) oder einen Lastenträger (L), umfassend einen Querträger (411-911) und mit dem Querträger (411-911) verbundene Seitenträger (412-912) zur Montage an einem Heck einer Karosserie (K) eines Fahrzeugs (F), sowie mindestens eine an dem Querträger (411-911) angeordnete Halterung (415-915) für eine Anhängekupplung (451; 551; 951) oder für ein Kupplungsteil (M) eines Lastenträgers (L), wobei die Trägeranordnung (410-910) einen aus einer Blechplatine (461-961) durch Umformen gefertigten, den Querträger (411-911) umfassenden Grundkörper (460-960) umfasst, wobei der Grundkörper (460-960) zusätzlich zu dem Querträger (411-911) mindestens einen integral durch den Körper (468-968) der Blechplatine (461-961) gebildeten Seitenträger (412-912) und/oder ein integral durch den Körper (468-968) der Blechplatine (461-961) gebildetes Gehäuse (450; 950) der Halterung (415-915) für die Anhängekupplung (451; 551; 951) oder das Lastenträger-Kupplungsteil (M) umfasst, **dadurch gekennzeichnet, dass** der Grundkörper (460-960) mindestens eine Verstärkungsumformung (430-930), nämlich eine Verstärkungssicke, aufweist.

2. Trägeranordnung nach Anspruch 1, **dadurch gekennzeichnet, dass** der Querträger (411-911) einen U-förmigen oder Z-förmigen oder V-förmigen oder W-förmigen Querschnitt aufweist.

3. Trägeranordnung nach Anspruch 1 oder 2, **dadurch gekennzeichnet, dass** der Grundkörper (460-960) durch eine Kaltumformung und/oder eine Warmumformung gebildet ist.

4. Trägeranordnung nach einem der vorhergehenden Ansprüche, **dadurch gekennzeichnet, dass** der Grundkörper (460-960) keine Verschweißung, insbesondere keine Schweißnaht, aufweist.

5. Trägeranordnung nach einem der vorhergehenden Ansprüche, **dadurch gekennzeichnet, dass** mindestens zwei benachbarte Abschnitte des Grundkörpers (460-960) einander überlappen und/oder mittels eines Falzes und/oder einer Klebeverbindung und/oder einer Schweißverbindung, insbesondere einer Widerstandsverschweißung, miteinander verbunden sind.

6. Trägeranordnung nach einem der vorhergehenden Ansprüche, **dadurch gekennzeichnet, dass** der Grundkörper (460-960) mindestens eine Ausnehmung zur Gewichtsreduktion aufweist.

7. Trägeranordnung nach einem der vorhergehenden Ansprüche, **dadurch gekennzeichnet, dass** eine im Bereich einer Quermitte (413) des Querträgers (411-911) zwischen den Seitenträgern (412-912) angeordnete Verstärkungsumformung (430-930) eine größere, sich von einer Seitenfläche des Querträgers (411-911) weg erstreckende Tiefe aufweist als eine sich zwischen der Quermitte (413) und einen Seitenträger (412-912) vorgesehene Verstärkungsumformung (430-930).

8. Trägeranordnung nach einem der vorhergehenden Ansprüche, **dadurch gekennzeichnet, dass** mindestens eine, insbesondere als eine Kerbvertiefung (431-934) ausgestaltete, Verstärkungsumformung (430-930) an einem Kantenbereich des Grundkörpers (460-960) vorgesehen ist.

9. Trägeranordnung nach einem der vorhergehenden Ansprüche, **dadurch gekennzeichnet, dass** die Seitenträger (412-912) und der Querträger (411-911), insbesondere in einem Winkel von etwa 80-110°, zueinander winkelig sind oder dass die Seitenträger (412-912) und der Querträger (411-911) parallel sind und/oder miteinander fluchten.

10. Trägeranordnung nach einem der vorhergehenden Ansprüche oder dem Oberbegriff des Anspruchs 1, **dadurch gekennzeichnet, dass** mindestens ein Seitenträger (412-912) eine Deformationsstruktur (444) zur geplanten Deformation bei einem Heckaufprall auf das Fahrzeug (F) aufweist.

11. Trägeranordnung nach Anspruch 10, **dadurch gekennzeichnet, dass** sich die Deformationsstruktur (444) zwischen zwei Montagebereichen (446) des Seitenträgers (412-912) zur Montage an der Karosserie (K) des Fahrzeugs (F) vorgesehen ist, so dass der Seitenträger (412-912) eine Deformation eines Abschnitts der Karosserie (K), der sich neben der Deformationsstruktur (444) erstreckt, korrespondierend mitmacht.

12. Trägeranordnung nach einem der vorhergehenden Ansprüche, **dadurch gekennzeichnet, dass** der Grundkörper (460-960) mindestens eine, insbesondere 1,5 - 3 mm, dicke Blechwand aufweist.

13. Trägeranordnung nach einem der vorhergehenden Ansprüche, **dadurch gekennzeichnet, dass** mindestens ein Tragbauteil (488-988) der Trägeranordnung (410-910), insbesondere der Querträger (411-911), durch mindestens ein eine Faseranordnung (487-987) aufweisendes Faserwerkstoffelement (580-980; 581, 881, 981) verstärkt ist.

14. Trägeranordnung nach Anspruch 13, **dadurch gekennzeichnet, dass** das mindestens eine Faserwerkstoffelement (580-980; 581, 881, 981) ein Non-Woven-Faserwerkstoffelement (580-980; 581, 881, 981), insbesondere ein Vlies und/oder einen Filz und/oder ein Faden- oder Fasergelege, und/oder ein Gewebe und/oder ein Fasergeflecht umfasst und/oder das die Faseranordnung (487-987) miteinander, insbesondere zu einem Gewirk und/oder einem Gestrick, vermaschte Fasern umfasst und/oder das mindestens eine Faserwerkstoffelement (580-980; 581, 881, 981) mit einem Klebstoff an das Tragbauteil (488-988) angeklebt ist und/oder dass das mindestens eine Faserwerkstoffelement (580-980; 581, 881, 981) eine dem mindestens einen Tragbauteil (488-988) angepasste Kontur aufweist, insbesondere als ein Prepreg-Bauteil oder Faserformkörper, ausgestaltet ist.

15. Verfahren zur Herstellung einer Trägeranordnung (410-910) für eine Anhängekupplung (451; 551; 951) oder einen Lastenträger (L), wobei die Trägeranordnung (410-910) einen Querträger (411-911) und mit dem Querträger (411-911) verbundene Seitenträger (412-912) zur Montage an einem Heck einer Karosserie (K) eines Fahrzeugs (F), sowie mindestens eine an dem Querträger (411-911) angeordnete Halterung (415-915) für eine Anhängekupplung (451; 551; 951) oder für ein Kupplungsteil (M) eines Lastenträgers (L) umfasst, wobei das Verfahren umfasst: Herstellen einer Blechplatine (461-961) durch Zuschnitt aus einem Rohmaterial und Umformen der Blechplatine (461-961) derart, dass die Trägeranordnung (410-910) einen aus der Blechplatine (461-961) durch Umformen gefertigten, den Querträger (411-911) umfassenden Grundkörper (460-960) umfasst, und der Grundkörper (460-960) zusätzlich zu dem Querträger (411-911) mindestens einen integral durch den Körper der Blechplatine (461-961) gebildeten Seitenträger (412-912) und/oder ein integral durch den Körper (468-968) der Blechplatine (461-961) gebildetes Gehäuse (450; 950) der Halterung (415-915) für die Anhängekupplung (451; 551; 951) oder das Lastenträger-Kupplungsteil (M) umfasst, **gekennzeichnet durch** Herstellen mindestens einer Verstärkungsumformung (430-930), nämlich einer Verstärkungssicke, an dem Grundkörper (460-960).

## Claims

1. Support assembly for a trailer coupling (451; 551; 951) or a load carrier (L), including a cross-member (411-911) and side members (412-912) joined to the cross-member (411-911) for fitting to a rear section of a body (K) of a motor vehicle (F), together with at least one mounting (415-915) fitted to the cross-member (411-911) for a trailer coupling (451; 551; 951) or for a coupling part (M) of a load carrier (L), wherein the support assembly (410-910) includes a base body (460-960) made from a sheet metal blank (461-961) by forming and comprising the cross-member (411-911), wherein the base body (460-960) includes, in addition to the cross-member (411-911), at least one side member (412-912) formed by the body (468-968) of the sheet metal blank (461-961) and/or a housing (450; 950) of the mounting (415-915) for the trailer coupling (451; 551; 951) or the load carrier (L) formed integrally by the body (468-968) of the sheet metal blank (461-961), **characterised in that** the base body (460-960) has at least one reinforcing conversion (430-930), namely a reinforcing beading.

2. Support assembly according to claim 1, **characterised in that** the cross-member (411-911) has a U-shaped or Z-shaped or V-shaped or W-shaped cross-section.

3. Support assembly according to claim 1 or 2, **characterised in that** the base body (460-960) is formed by cold forming and/or hot forming.

4. Support assembly according to any of the preceding claims, **characterised in that** the base body (460-960) has no welding, in particular no weld seam.

5. Support assembly according to any of the preceding claims, **characterised in that** at least two adjacent sections of the base body (460-960) overlap one another and/or are joined to one another by means of a fold and/or an adhesive bond and/or a welded joint, in particular a resistance weld.

6. Support assembly according to any of the preceding claims, **characterised in that** the base body (460-960) has at least one recess for weight reduction.

7. Support assembly according to any of the preceding claims, **characterised in that** a reinforcing conversion (430-930) located in the area of a lateral centre (413) of the cross-member (411-911) between the side members (412-912) has a greater depth extending away from one side face of the cross-member (411-911) than a reinforcing conversion (430-930) provided between the lateral centre (413) and a side member (412-912).

8. Support assembly according to any of the preceding claims, **characterised in that** at least one reinforcing conversion (430-930), in particular in the form of a notch recess (431-934), is provided at an edge section of the base body (460-960).

9. Support assembly according to any of the preceding claims, **characterised in that** the side members (412-912) and the cross-member (411-911) are at an angle to one another, in particular at an angle of around 80-110°, or that the side members (412-912) and the cross-member (411-911) are parallel to and/or flush with one another.

10. Support assembly according to any of the preceding claims or the preamble of claim 1, **characterised in that** at least one side member (412-912) has a deformation structure (444) for planned deformation in the event of a rear collision on the vehicle (F).

11. Support assembly according to claim 10, **characterised in that** the deformation structure (444) is provided between two mounting areas (446) of the side member (412-912) for mounting on the body (K) of the vehicle (F), so that the side member (412-912) correspondingly accompanies a deformation of a section of the body (K) which extends next to the deformation structure (444).

12. Support assembly according to any of the preceding claims, **characterised in that** the base body (460-960) has at least one sheet metal wall, in particular 1.5 - 3 mm thick.

13. Support assembly according to any of the preceding claims, **characterised in that** at least one carrier part (488-988) of the support assembly (410-910), in particular the cross-member (411-911), is reinforced by at least one fibre material element (580-980; 581, 881, 981) which has a fibre arrangement (487-987).

14. Support assembly according to claim 13, **characterised in that** the fibre material element or elements (580-980; 581, 881, 981) comprises or comprise a anon-woven fibre material element (580-980; 581, 881, 981), in particular a non-woven and/or a felt and/or a scrim or a fibre layer, and/or a woven fabric and/or a fibre mesh and/or that the fibre arrangement (487-987) comprises fibres meshed together, in particular to form a knitted fabric, and/or the fibre material element or elements (580-980; 581, 881, 981) is or are bonded by an adhesive to the carrier part (488-988), and/or that the fibre material element or elements (580-980; 581, 881, 981) has or have a contour matching the carrier part (488-988), in particular in the form of a prepreg component or a fibrous moulded body.

15. Method of producing a support assembly (410-910) for a trailer coupling (451; 551; 951) or a load carrier (L), wherein the support assembly (410-910) includes a cross-member (411-911) and side members (412-912) joined to the cross-member (411-911) for fitting to a rear section of a body (K) of a motor vehicle (F), together with at least one mounting (415-915) fitted to the cross-member (411-911) for a trailer coupling (451; 551; 951) or for a coupling part (M) of a load carrier (L), wherein the method comprises: production of a sheet metal blank (461-961) by cutting from a raw material and forming the sheet metal blank (461-961) in such a way that the support assembly (410-910) includes a base body (460-960) produced from the sheet metal blank (461-961) by forming and comprising the cross-member (411-911), and the base body (460-960) includes, in addition to the cross-member (411-911), at least one side member (412-912) formed integrally by the body of the sheet metal blank (461-961) and/or a housing (450; 950) of the mounting (415-915) for the trailer coupling (451; 551; 951) or the load carrier-coupling part (M) formed integrally by the body (468-968) of the sheet metal blank (461-961), **characterised by** production of at least one reinforcing conversion (430-930), namely a reinforcing beading, on the base body (460-960).

## Revendications

1. Ensemble de support pour un attelage de remorque (451 ; 551 ; 951) ou un support de charges (L), comprenant une traverse (411 - 911) et des supports latéraux (412 - 912) reliés à la traverse (411 - 911), destinés à être montés au niveau d'une partie arrière d'une carrosserie (K) d'un véhicule (F), ainsi qu'au moins une fixation (415- 915) disposée au niveau de la traverse (411 - 911) pour un attelage de remorque (451 ; 551 ; 951) ou pour une partie d'attelage (M) d'un support de charges (L), dans lequel l'ensemble de support (410 - 910) comprend un corps de base (460 - 960) produit par façonnage à partir d'une platine de tôle (461 - 961), comprenant la traverse (411 -911), dans lequel le corps de base (460 - 960) comprend en supplément de la traverse (411 - 911) au moins un support latéral (412 - 912) formé intégralement par le corps (468 - 968) de la platine de tôle (461 - 961) et/ou un boîtier (450 ; 950), formé intégralement par le corps (468 - 968) de la platine de tôle (461 - 961), de la fixation (415 - 915) pour l'attelage de remorque (451 ; 551 ; 951) ou la partie d'attelage de support de charges (M), **caractérisé en ce que** le corps de base (460 - 960) présente au moins un façonnage de renforcement (430 - 930), à savoir une moulure de renforcement.

2. Ensemble de support selon la revendication 1, **caractérisé en ce que** la traverse (411 - 911) présente une section transversale en forme de U ou en forme de Z ou en forme de V ou en forme de W.

3. Ensemble de support selon la revendication 1 ou 2, **caractérisé en ce que** le corps de base (460 - 960) est formé par un façonnage à froid et/ou un façonnage à chaud.

4. Ensemble de support selon l'une quelconque des revendications précédentes, **caractérisé en ce que** le corps de base (460 - 960) ne présente aucune soudure, en particulier aucun cordon de soudure.

5. Ensemble de support selon l'une quelconque des revendications précédentes, **caractérisé en ce qu'**au moins deux sections adjacentes du corps de base (460 - 960) se chevauchent et/ou sont reliées l'une à l'autre au moyen d'une feuillure et/ou d'une liaison par collage et/ou d'une liaison par soudage, en particulier d'un soudage par résistance.

6. Ensemble de support selon l'une quelconque des revendications précédentes, **caractérisé en ce que** le corps de base (460 - 960) présente au moins un évidement pour la réduction de poids.

7. Ensemble de support selon l'une quelconque des revendications précédentes, **caractérisé en ce qu'**un façonnage de renforcement (430 - 930) disposé dans la zone d'un milieu transversal (413) de la traverse (411 - 911) entre les supports latéraux (412 - 912) présente une profondeur s'étendant de manière à s'éloigner d'une face latérale de la traverse (411 - 911) plus grande qu'un façonnage de renforcement (430 - 930) prévu entre le milieu transversal (413) et un support latéral (412-912).

8. Ensemble de support selon l'une quelconque des revendications précédentes, **caractérisé en ce qu'**au moins un façonnage de renforcement (430 - 930) configuré en particulier en tant que creux entaillé (431 - 934) est prévu au niveau d'une zone d'arête du corps de base (460 - 960).

9. Ensemble de support selon l'une quelconque des revendications précédentes, **caractérisé en ce que** les supports latéraux (412 - 912) et la traverse (411 - 911) sont angulaires les uns par rapport aux autres, en particulier selon un angle d'environ 80 à 110° ou que les supports latéraux (412-912) et la traverse (411 - 911) sont parallèles et/ou sont en affleurement les uns avec les autres.

10. Ensemble de support selon l'une quelconque des revendications précédentes ou selon le préambule de la revendication 1, **caractérisé en ce qu'**au moins un support latéral (412-912) présente une structure de déformation (444) pour la déformation planifiée en cas d'impact arrière sur le véhicule (F).

11. Ensemble de support selon la revendication 10, **caractérisé en ce que** la structure de déformation (444) est prévue entre deux zones de montage (446) du support latéral (412 - 912) aux fins du montage au niveau de la carrosserie (K) du véhicule (F) de sorte que le support latéral (412 - 912) participe de manière correspondante à une déformation d'une section de la carrosserie (K), qui s'étend à côté de la structure de déformation (444).

12. Ensemble de support selon l'une quelconque des revendications précédentes, **caractérisé en ce que** le corps de base (460 - 960) présente au moins une paroi de tôle épaisse en particulier de 1,5 à 3 mm.

13. Ensemble de support selon l'une quelconque des revendications précédentes, **caractérisé en ce qu'**au moins un composant porteur (488 - 988) de l'ensemble de support (410 - 910), en particulier la traverse (411 - 911), est renforcé par au moins un élément en matériau à base de fibres (580 - 980 ; 581, 881, 981) présentant un ensemble de fibres (487 - 987).

14. Ensemble de support selon la revendication 13, **caractérisé en ce que** l'au moins un élément en matériau à base de fibres (580 - 980 ; 581, 881, 981) comprend un élément en matériau à base de fibres non tissé (580 - 980 ; 581, 881, 981), en particulier un non-tissé et/ou un feutre et/ou un assemblage de fils ou de fibres et/ou un tissu et/ou un tressage de fibres et/ou que l'ensemble de fibres (487 - 987) comprend des fibres maillées les unes avec les autres, en particulier pour former un tissu à mailles et/ou un tricot et/ou l'au moins un élément en matériau à base de fibres (580 - 980 ; 581, 881, 981) est collé avec une colle au niveau du composant porteur (488 - 988) et/ou que l'au moins un élément en matériau à base de fibres (580 - 980 ; 581, 881, 981) présente un contour adapté à l'au moins un composant porteur (488 - 988), en particulier est configuré en tant qu'un composant de préimprégné ou un corps moulé à base de fibres.

15. Procédé de fabrication d'un ensemble de support (410 - 910) pour un attelage de remorque (451 ; 551 ; 951) ou un support de charges (L), dans lequel l'ensemble de support (410 - 910) comprend une traverse (411 - 911) et des supports latéraux (412 - 912) reliés à la traverse (411 - 911), destinés à être montés au niveau d'une partie arrière d'une carrosserie (K) d'un véhicule (F), ainsi qu'au moins une fixation (415 - 915) disposée au niveau de la traverse (411 - 911) pour un attelage de remorque (451 ; 551 ; 951) ou pour une partie d'attelage (M) d'un support de charges (L), dans lequel le procédé comprend :
la fabrication d'une platine de tôle (461 - 961) par une découpe d'un matériau brut et le façonnage de la platine de tôle (461 - 961) de telle manière que l'ensemble de support (410-910) comprend un corps de base (460 - 960) produit par façonnage à partir de la platine de tôle (461 - 961), comprenant la traverse (411 - 911), et le corps de base (460 - 960) comprend, en supplément de la traverse (411 - 911), au moins un support latéral (412 - 912) formé intégralement par le corps de la platine de tôle (461 - 961) et/ou un boîtier (450 ; 950), formé intégralement par le corps (468 - 968) de la platine de tôle (461 - 961), de la fixation (415-915) pour l'attelage de remorque (451 ; 551 ; 951) ou la partie d'attelage de support de charges (M), **caractérisé par** la fabrication d'au moins un façonnage de renforcement (430 - 930), à savoir d'une moulure de renforcement, au niveau du corps de base (460 - 960).
